# EUROPEAN PATENT APPLICATION

(11) **EP 2 998 124 A2**
(43) Date of publication of application: **23.03.2016**
(21) Application number: 15183346.4
(22) Date of filing: 19.01.2011
(51) Int. Cl.: B41J 3/407, B41J 3/54, B65B 23/02, B65B 23/06, B65B 63/00, B65D 85/32, A23L 15/00

(54) **SYSTEMS AND METHODS FOR PROCESSING EGGS**

(30) Priority: 20.01.2010 US 690890; 20.01.2010 US 690872; 20.01.2010 US 690898; 20.01.2010 US 690859; 20.01.2010 US 690876; 20.01.2010 US 296837 P; 20.01.2010 US 690886; 20.01.2010 US 690896
(62) Divisional of application: 11703946.1
(71) Applicant: Ten Media, LLC, Beverly Hills, CA 90210 (US)
(72) Inventor: CHAIT, Mitchell, Barry, Las Vegas, NV Nevada 89147 (US); BROWN, Allan, Irwin, Beverly Hills, CA California 90210 (US); HEGYI, Marco, Armand, Laguna Niguel, CA California 92677 (US); ANDERSON, Greg, Kissimmee, FL Florida 34746 (US)
(74) Representative: Bertsch, Florian Oliver

(57) **Abstract**

A method for laser marking an egg shell is provided. The method comprises controlling a laser beam directed onto the egg shell so as to discolor an outer layer of the egg shell without etching substantially into layers of the egg shell underneath the outer layer.

## Description

### Related Applications

This application claims priority under 35 U.S.C. § 119(e) to U.S. Provisional Application Serial No. 61/296,837, entitled "SYSTEMS AND METHODS FOR PROCESSING EGGS," filed on January 20, 2010, which is herein incorporated by reference in its entirety.

This application also claims the benefit under 35 U.S.C. § 120 as a continuation, of the following of U.S. non-provisional patent applications all filed January 20, 2010:

| Serial No. | Title |
|---|---|
| 12/690,859 | SYSTEMS AND METHODS FOR PROCESSING EGGS |
| 12/690,872 | SYSTEMS AND METHODS FOR PROCESSING EGGS |
| 12/690,876 | SYSTEMS AND METHODS FOR PROCESSING EGGS |
| 12/690,886 | SYSTEMS AND METHODS FOR PROCESSING EGGS |
| 12/690,890 | SYSTEMS AND METHODS FOR PROCESSING EGGS |
| 12/690,896 | SYSTEMS AND METHODS FOR PROCESSING EGGS |
| 12/690,898 | SYSTEMS AND METHODS FOR PROCESSING EGGS |

### Field

The invention(s) described herein relate generally to the fields of food safety assurance and food product processing. Some described embodiments relate particularly to systems and techniques for laser marking, ink marking and/or otherwise processing eggs.

### Background

Food safety is a major public concern, in general. Eggs, in particular, represent a food product distributed and consumed in large quantities and, for many of the same reasons making them desirable food stuffs, also present a unique safety risk. Eggs (most commonly chicken eggs) contain nutrients which can support the growth of dangerous bacteria, when contaminated.

Eggs are a perishable item susceptible to spoilage, as well. To address the concern about spoilage - i.e., whether the egg is fresh - egg packages typically (and often by law or regulation) have expiration dates marked on them. However, eggs may be stored for days or even weeks before being sold at retail. Expiration dates, (a term encompassing such variations as "sell by" and "best if used by" dates) thus may not convey to a consumer or user how "old" an egg truly is.

Many consumers, moreover, move eggs from their packages into special receptacles in their refrigerators. In this fashion, additionally, eggs from multiple cartons may come to be intermingled. When these things are done, the consumer is no longer able to evaluate the expiration date of individual eggs prior to using them.

To reduce the chance of a consumer being sold a spoiled egg, certain governmental bodies in the United States and elsewhere, e.g., the United States Food and Drug Administration (FDA), the United States Department of

Agriculture (USDA), and various state governments, currently do not allow retailers to "repack" eggs, i.e., to move eggs from one package to another. This restriction, unfortunately, can result in tremendous waste. For example, whenever the integrity of even a single egg in a package in the hands of a retailer is compromised (e.g., is broken), the entire package of eggs must be discarded.

Eggs typically undergo a great deal of processing before they are ready to be sold to the consuming public. In many circumstances, for example, eggs pass through several processing stations at which they are washed, candled, weighed, graded, and packed into packages (e.g., cartons, crates, or other commercially distributed containers). Examples of such processing stations and mechanisms for conveying eggs from station to station are described, for instance, in the following U.S. patents assigned to Diamond Automations, Inc.: 4,189,898; 4,195,736; 4,505,373; 4,519,494; 4,519,505; 4,569,444; 4,750,316; 5,321,491; and 6,056,341, the entire contents of each of which are incorporated herein by reference. It is not uncommon for a facility in which these stations operate to output about one million eggs in a single day. Accordingly, to be commercially acceptable, the throughput of the stations needs to be quite high, with some stations typically processing on the order of 20,000 eggs per hour. When contamination (and possibly spoilage) of eggs is discovered, therefore, not only is it likely that the number of persons made ill - or worse - will be quite large, but also that enormous numbers of eggs must be recalled and destroyed. Many of those eggs will not have been contaminated and will have to be destroyed - at considerable financial loss - because there is no way to isolate the bad eggs from the total population of eggs from a suspect source.

Several techniques for marking individual eggs with expiration dates and the like have been proposed. One such approach is to use vegetable dyes or other water-soluble ink products to mark eggs. Such products, however, have a tendency to leak into the interior of eggs and can result in undesirable ink spots within them. The tendency of such products to wash off or fade also means that such markings are susceptible to tampering and even unintentional loss of integrity (e.g., dripping and smearing from condensation and handling), and has generally limited their acceptance.

It is also known to use lasers to mark indicia onto perishable products for the purpose of tracking their pedigree and/or integrity (e.g., using date codes and/or traceability codes), as well as for allowing textual or graphical advertising messages to be disseminated via such products. An example of a system for laser marking such information on hen eggs is described, for example, in U.S. Patent Application Serial No. 11/725,099, Publication No. 2008/0223834 ("the '834 Application"), published on September 18, 2008. The disclosure of the '834 Application is incorporated herein by reference in its entirety.

### Summary

The approach described in the '834 Application is to laser mark information on eggs as they are conveyed at high speed during the grading process. This information may include, for example, a freshness date, a traceability code and/or advertising. Although this approach has proven effective for certain applications, the extremely high throughput of the grading machines, the lack of uniformity in the moisture content of the surface of individual eggs during the grading process, and the significant amount of dust created during the laser marking process, among other things, have made it challenging to mark individual eggs with sufficient accuracy, reliably and consistency for certain purposes.

Among those purposes, providing a freshness date and/or a traceability code in relation to which an egg's processing history may be maintained in an online database obviously requires a marking that not only is permanent and difficult to alter, but also which is clearly and reliably readable.

Additionally, it should be appreciated that egg producers have invested considerable sums of money in their hardware - grading and packing machines, conveyors, and the like. To get them to replace such equipment with entirely new systems would be a substantial challenge and slow adoption of seriously needed food safety enhancement. Thus, a need exists for an egg marking approach based on equipment that can be added on to existing egg-handling systems.

Complicating this need, existing egg-handling apparatus is of varied designs. Preferably, a marking system can be provided which is usable with a variety of egg-handling apparatus, with no or minimal modification of that apparatus.

Prior approaches may not meet the foregoing objectives or requirements.

This disclosure presents new approaches to marking eggs, based upon inventive apparatus and methods, various alternative embodiments of which are shown. Any single embodiment may not, and generally may not, embody all the inventive aspects that are discussed. Moreover, unless the context clearly indicates otherwise, it is contemplated that those skilled in the art will combine aspects of the invention and features of embodiments to create new embodiments not expressly illustrated or discussed, and that such variant embodiments are intended to be captured within the claims.

In summary, the following paragraphs now provide a non-exhaustive enumeration of inventive aspects and features of the embodiments described, in greater detail below, and shown in the drawings.

A method for laser marking an egg shell is disclosed which comprises controlling a laser beam directed onto the egg shell so as to discolor an outer layer of the egg shell without etching substantially into layers of the egg shell underneath the outer layer.

In addition, a method for laser marking an egg is disclosed which comprises directing a laser beam onto an egg at a power density of about 2000 watts/sq. in. or less, at a sweep rate adequate to produce discoloration suitable to print an image. Further, an egg having laser marking thereon is disclosed wherein a depth of an etching of the egg caused by the laser marking process does not exceed about 25 microns.

A method for processing a package of eggs is disclosed which comprises adjusting a position of one or more of the eggs, after the eggs have been placed in a container (also referred to as a package or carton), so that each of the eggs assumes a particular orientation within the package.

In some embodiments, the method may also comprise marking information on a surface of one or more of the eggs after the position of the one or more of the eggs has been adjusted.

Additionally, in some embodiments, the position of the one or more eggs may be adjusted using an egg orienter positioned above a conveyor of an egg packing station.

Further, in some embodiments, the position of the one or more eggs in the package may be adjusted so that a long axis of each egg in the package is tilted toward the back of the package so as to be at least slightly offset from vertical and/or so that long axes of all of the eggs in each row of eggs in the package form approximate right angles with respect to a line intercepting bottoms of receptacles holding the eggs in such a row.

An apparatus for processing packages of eggs on a conveyor is disclosed which comprises an egg orienter configured and arranged with respect to the conveyor so as to adjust a position of one or more of the eggs in each of the packages so that each of the eggs in a given package assumes a particular orientation within that package.

In some embodiments, the egg orienter may be located between an egg loading section and a package closing section of an egg packer.

In addition, in some embodiments, the apparatus may further comprise a laser source and one or more optical steering elements configured and arranged to direct laser energy from the laser source so as to laser mark information on a surface of one or more of the eggs while the eggs are in a package disposed on the conveyor and in said particular orientation.

In some embodiments, the egg orienter may be further configured and arranged to adjust the position of the one or more eggs in each of the packages so that a long axis of each egg in a given package is tilted toward the back of the package so as to be at least slightly offset from vertical and/or so that so that long axes of all of the eggs in each row of eggs in the package form approximate right angles with respect to a line intercepting bottoms of receptacles holding the eggs in such a row.

Additionally, an apparatus for processing packages of eggs on a conveyor is disclosed which comprises means for adjusting a position of one or more of the eggs in each package so that each of the eggs in a given package assumes a particular orientation, and one or more sensors configured and arranged to sense a position of each of the packages of eggs with respect to the means for adjusting.

A method for marking eggs is disclosed which comprises laser marking and/or ink marking information onto one or more eggs while the eggs are in a package disposed on a conveyor of a packing station.

Additionally, an apparatus for laser marking eggs on a conveyor of a packing station is disclosed which comprises a laser source and one or more optical steering elements configured and arranged to direct energy from the laser source so as to mark information onto one or more eggs in packages of eggs disposed on the conveyor.

Further, an apparatus for laser marking eggs is disclosed which comprises a laser source and means for directing energy from the laser source so as to mark information onto one or more eggs in packages of eggs disposed on a conveyor of a packing station.

A package of eggs is disclosed which comprises a plurality of eggs arranged in one or more rows. The eggs are arranged in the package so that a long axis of each egg in the package is tilted toward the back of the package so as to be at least slightly offset from vertical.

In some embodiments, each of the eggs in the package may have information laser marked on it in substantially the same location as the other eggs in the package, and the eggs may be oriented in the package such that markings on all the eggs face in substantially the same direction.

Additionally, in some embodiments, each of the eggs in the package may have particular information marked on it, and each of the eggs in the package may be positioned in the package such that at least the particular information is visible upon opening the package, without altering a position of the egg.

Further, in some embodiments, the eggs may be arranged in the package such that the long axes of all of the eggs in each row of eggs in the package form approximate right angles with respect to a line intercepting bottoms of receptacles holding the eggs in such a row and/or such that the long axes of all of the eggs in each row of eggs in the package form approximate right angles with respect to a line intercepting bottoms of receptacles holding the eggs in such a row.

A package of eggs is disclosed which comprises a plurality of eggs arranged in one or more rows. The eggs are further arranged in the package so that a long axis of each egg in the package is offset no more than a particular number degrees from a long axis of each other egg in the package.

Additionally, a package of eggs is disclosed which comprises a plurality of eggs arranged in one or more rows, wherein the eggs are further arranged in the package so that the long axes of all of the eggs in the package are substantially parallel.

Further, a package of eggs is disclosed which comprises a plurality of eggs arranged in one or more rows, wherein eggs are arranged in the package such that long axes of all of the eggs in each row of eggs in the package form approximate right angles with respect to a line intercepting bottoms of receptacles holding the eggs in such a row.

A method for laser marking information on an egg is disclosed which comprises laser marking information on the egg such that a center point of the information is located between the middle and an end of the egg.

In addition, an egg having information laser marked thereon is disclosed, wherein a center point of the information laser marked onto the egg is located between the middle and an end of the egg.

Further, a method for processing one or more eggs is disclosed which comprises laser marking first information on a first surface of an egg, and laser marking second information on a second surface of the egg such that the second information faces a substantially different direction than the first information.

Thus there is also shown an egg having laser marking thereon is disclosed wherein first information is laser marked on a first surface of the egg, and second information is laser marked on a second surface of the egg such that the second information faces a substantially different direction than the first information.

In addition, a package of eggs is disclosed wherein each of the eggs in the package has first information laser marked on it in substantially the same location as the other eggs in the package and the eggs are oriented in the package such that information laser marked on each egg faces substantially the same direction as the information laser marked on the other eggs in the package. In addition, each of the eggs in the package has second information laser marked on it in substantially the same location as the other eggs in the package, and, for each of the eggs in the package, the second information faces a substantially different direction than the first information.

Further, a package of eggs is disclosed wherein at least two of the eggs in the package have different information laser marked on them.

In some embodiments, information may be laser marked on at least one egg such that at least some of the information comprises text that is oriented horizontally with respect to a long axis of the egg and/or such that a center point of the information laser marked onto the egg is located between the middle and an end of the egg.

A method for laser marking eggs is disclosed which comprises using a machine vision system to monitor laser marking of eggs by a laser marking system, and adjusting one or more parameters of the laser marking system (e.g., spot size intensity, and/or exposure time) based upon determinations made by the machine vision system.

Additionally, a system for laser marking eggs is disclosed which comprises a machine vision system and one or more control elements. The machine vision system is configured and arranged to monitor laser marking of eggs by a laser marking system, and the one or more control elements are configured and arranged to adjust one or more parameters of the laser marking system based upon determinations made by the machine vision system.

Further, a system for laser marking eggs is disclosed comprising multiple laser marking apparatuses and a central server. The laser marking apparatuses are configured and arranged to perform laser marking jobs queued by local computers for laser marking eggs being packed by egg packing stations. The central server is configured to distribute the laser marking jobs to the local computers.

In addition, a method is disclosed for controlling laser marking jobs which comprises distributing the laser marking jobs from a central computer to local computers responsible for queuing laser marking jobs to one or more laser marking apparatuses configured and arranged to laser mark information on eggs. Methods and apparatus also are shown for combining laser marking and ink marking of eggs, using any of the foregoing laser marking methods or apparatus. When laser and ink marking are combined, the laser marking may be used to record on eggs information which, for product assurance reasons, preferably comprises a permanent marking, such as a traceability code and/or freshness date or the like, with only "less critical" information being marked by ink. However, if permanent ink is employed, it also is contemplated that ink marking may make laser marking unnecessary.

Combining laser marking and ink marking in the same environment may require that safety precautions be taken, unless the inks are water-soluble. To combine laser marking of eggs with ink jet printing using permanent inks is complicated. It is not simply a matter of substituting for water-soluble inks those which have a different chemical composition, because those different compositions normally involve a volatile component which creates a flammable or explosive atmosphere as the ink is applied and dries. The energy from a laser beam can ignite the volatile vapors. Approaches are shown for reducing the risk of ignition of the volatile vapors. For example, in some embodiments, the lasing station(s) may be shrouded by a housing wherein a positive pressure of a clean air (or inert gas) environment is maintained, so that the level of volatile vapors is maintained below that which is combustible. Or the lasing station(s) and ink printing station(s) may be separated by several (e.g., 15 - 20 or more) feet and an exhaust system may draw away the volatile vapors to a degree sufficient to reduce the level of volatile vapors exposed to the laser beams to one which is well below a combustible mixture. Alternatively, an inert gas may be pumped into the lasing station so as to keep the oxygen level low and avoid a combustible mixture.

Having achieved methods and systems for marking eggs while they are "in-carton," and presented in a uniform orientation, it also has been realized that objects other than eggs may be process using similar methods and apparatus. Accordingly, one aspect of the invention shown herein is a method for processing a package of objects, comprising a step of, after the objects have been placed in the package, mechanically adjusting a position of one or more of the objects so that each of the objects assumes a particular orientation within the package.

Optionally, one or more of the objects then may receive information marked on its surface. Such marking may, but need not, comprise laser marking the information on a surface of one or more of the objects.

The orienting step may be performed using an object orienter positioned above the package and comprising a plurality of resilient members configured and arranged to be moved relative to the objects in the package so as to urge them to predetermined orientations. Orienting objects may further comprise adjusting the position of the one or more objects in the package so that a long axis of each object in the package is tilted toward the back of the package so as to be at least slightly offset from vertical.

Another aspect is thus an apparatus for processing packages of objects on a conveyor, comprising an object orienter configured and arranged with respect to the conveyor so as to adjust a position of one or more of the objects in each of the packages so that each of the objects in a given package assumes a particular orientation within that package. The object orienter may be further configured and arranged to adjust the position of the one or more objects in each of the packages so that a long axis of each object in a given package is tilted toward the back of the package so as to be at least slightly offset from vertical.

In some embodiments, the orienter may comprise a plurality of resilient members configured and arranged to be moved relative to the objects in each package so as to urge them to predetermined orientations.

In some embodiments according to this aspect, the objects are eggs and each package has a bottom portion for receiving eggs and a hinged lid, and the apparatus further comprises a package reversing mechanism upstream of the orienter, which receives packages with lids open and oriented toward an upstream direction and then reverses the package direction so that the open lid is disposed toward the orienter and leading the package; and downstream of the orienter, one or more printing stations for printing information on the eggs. The printing stations may include laser and/or ink marking apparatus. If both laser and ink printing are incorporated, care must be taken to ensure safety and compatibility. The conveyor preferably is slanted in an upward direction relative to movement of the packages with respect to the orienter and the one or more printing stations, so that gravity assists in keeping the eggs tilted in the package, as they are positioned by the orienter, as the conveyor moves packages along.

### Brief Description of the Drawings

Fig. 1 is a side-view of an illustrative example of a laser marking system embodying various inventive features, configured to be operational with a conventional egg packing apparatus;
Figs. 2-4 are partially cut-away, perspective views of various components of the system shown in Fig. 1;
Figs. 5A and 5B are partial block diagrams of top and side views, respectively, of a portion of the conveyor used by the system shown in Figs. 1-4 and various components that may operate in conjunction therewith;
Fig. 6 is a perspective view of an illustrative embodiment of an egg orienter that may be used in a system such as that illustrated in Fig. 5;
Figs. 7A and 7B illustrate side and front views, respectively, of an egg package containing eggs as it may appear after it has been processed by an egg orienter such as that shown in Figs. 5 and 6;
Fig. 8 is an illustration of a front view of an egg as it may appear when marked using one or more the techniques described herein;
Fig. 9 is a block diagram showing components of a computer network that may be employed to allow for centralized control of laser marking apparatuses located at different facilities;
Figs. 10A and 10B show perspective views of the two sides of a driving mechanism that may be used to move the egg orienter of Fig. 6 in a desired manner;
Figs. 11A and 11B are, respectively, side and top schematic diagrams of an alternative egg marking system illustrating marking with both laser energy and ink, in an embodiment that may be added on to most conventional egg grading and packing systems; and
Fig. 12 is a simplified side sectional diagrammatic illustration of a portion of the system of Figs. 11 A and 11 B used to reverse the direction of an egg package

### Detailed Description

Laser marking eggs "on the fly" at high speeds, e.g., while the eggs are in motion through a grading station at speeds of typically about 100 to 300 feet per minute (fpm), is problematic for several reasons. For example, it can produce a less-than-ideal result in some circumstances, in terms of marking quality and reliability. "Reliability," in this context, refers to the percentage of eggs processed by the system that have clear, legible, and consistent markings on them (whether evaluated objectively or subjectively). For example, we have recognized that in order for a means of marking eggs with indicia suitable for repacking purposes to be both widely commercially viable and economically feasible, it is important for a large percentage of the eggs processed to have clear, legible, consistent markings. One reason for this is that, in many circumstances, eggs that are mismarked with such indicia must be discarded, for one reason or another.

In addition, we have observed, for example, that the limited window of time and finite space available for accessing and laser marking an egg using on- the-fly techniques typically permits only a limited amount of information to be laser marked on the egg in a direction extending along the egg's long axis. The inherent lack of accuracy in tracking a high-speed moving target, as well as the orientation, inevitable vibrations, and other motion within such a moving mechanical system, can further compromise the quality of the resulting image and render it insufficient for certain purposes.

Moreover, our experience has shown that attempting to laser mark eggs during the grading process can be problematic for some applications because a typical process involves washing the eggs shortly before attempting to laser mark indicia onto them. The resulting lack of uniformity in the dryness of the surface of the eggs can result in inaccurate or uneven markings. Laser marking codes in small fonts and complex information, e.g., an intricate company logo, during the grading process can be particularly problematic for the foregoing reasons.

In addition, the dust generated during the laser marking process can cause problems for both local (i.e., at the laser marking station) and downstream components. While vacuuming away excess dust can be performed, it has proven difficult in practice to accomplish effectively.

Furthermore, when eggs are marked at a particular location, e.g., on their sides, before they reach the packer, there is a risk that the packer will put the eggs into the package in an orientation that precludes or obscures visibility.

Accordingly, eggs marked by components upstream of the packer frequently are packed in such a way that the marked indicia on the egg will be hidden unless and until the egg is repositioned so as to be properly oriented for clear visibility of the marking.

Additionally, when eggs are marked before they reach a packer, the ability to redirect the eggs to a needed location after they have been marked is restricted. That is, once an egg has been marked in a particular way, it can be directed only to a packer that is processing eggs consistent with the markings that were marked on it. For example, once an egg has been marked with a manufacturer's logo, that egg cannot thereafter be directed to a packer responsible for packing eggs for a different manufacturer.

We have further observed that, if one desires to employ a uniform apparatus that can be retrofit or added to existing egg-handling systems of different designs, the one portion that such systems share in common is the conveyor of the egg packer, where eggs are delivered for packing into cartons, or in the cartons themselves.

Significantly, we have found that integrating a laser marking process into an egg packing apparatus, rather than an upstream component such as a grading station, involves a different set of constraints and can produce substantial benefits. In particular, we have determined that laser marking eggs in a packing apparatus, after they have been placed into packages, can alleviate at least some, and perhaps even all, of the various drawbacks of the grader-based laser marking process discussed above, as well as providing an approach adaptable to all or most preexisting egg production systems. Indeed, we have observed in practice that an embodiment of the system described herein can result in a large improvement in laser marking quality and reliability over a grader-based system. Moreover, it allows laser marking on much more of the eggs' surfaces and can do so without slowing down egg processing. In some embodiments, it also facilitates the integration of laser marking with ink marking, the latter permitting (if desired) multi-color printing.

In some embodiments, a continuous conveyor that carries filled packages of eggs may slow or stop periodically as each new row of each new package of eggs is loaded. Advantageously, the eggs in a loaded package may be laser marked during one or more of the periods (after the loading period) during which the package is held stationary as the rows of eggs are loaded into another upstream package. One or more sensors (e.g., photo-electric eyes) and/or conveyor motion monitors (e.g., a monitor that counts ticks of a conveyor belt) may be used to determine precisely when a loaded package of eggs has moved into position to be lased. If ink printing is being combined with laser printing they may be done when the eggs are in a same position or each may be performed when the eggs are at different positions. For example, one row of eggs may be lased while another row is being inked. The accuracy of both the laser and ink markings can therefore be enhanced considerably simply because the eggs remain stationary during the printing operation(s). In other embodiments, the conveyor may carry packed packages of eggs at a somewhat constant rate (subject to start- and-stop motion) in front of the laser-aiming mirrors (aka "galvos"). In such embodiments, a combination of sensors and conveyor motion monitors may be used to accurately track the position of the respective eggs during the printing process.

In some embodiments, multiple galvos may be used to laser mark the eggs in each package that passes by a laser marking station. In addition, packages of eggs typically advance on a conveyor of a packer at but a small fraction of the rate at which individual eggs move through an upstream grader. As such, using the implementations described herein, a significantly longer window of time may be available for each galvo to laser mark each individual egg and for ink jet apparatus to ink-print eggs. (Note that prior ink printing of eggs typically is limited to stamping, not ink-jet printing. The material ink printed therefore tends not to be very intricate in features, and tends to be monochrome). This additional available marking time may allow the galvos to make multiple passes over each egg and thereby increase the laser marking quality (e.g., contrast) significantly, while similarly allowing for much improved ink marking, as well.

Another potential benefit to laser marking eggs in packages is that the eggs may be manipulated so as to be oriented in the packages in a particular (uniform) manner in advance of the printing process. For example, in some embodiments, eggs in the packages on the conveyor of a packer may be manipulated so that all of the eggs are centered and tilted slightly backwards, uniformly. As such, a relatively large surface area of the egg will be immediately visible to a consumer (or an inspector, vendor, or other person) who opens the package. By so orienting the eggs in the package prior to the printing process, the amount of "visible" surface area made available to the laser (and ink head, if used), for marking, may be increased. In addition, the information that is actually marked on the eggs (expiration dates, tracking codes, advertisements, etc.) will be readily communicated to the consumer (or an inspector, vendor, or any other person who might subsequently open the package) immediately upon opening the package. As an example, a consumer opening a carton of eggs may immediately be presented with neatly arranged, uniformly oriented rows of eggs, each having information such as a company's logo and/or an expiration date prominently displayed at the same location and directly facing the customer.

In addition to the above, laser marking eggs after they have been placed in packages can further be advantageous because of the limited number of components located downstream of the laser marking station and the reduced likelihood that the dust created during the laser marking process will interfere with the operation of any mechanical or optical components. In some embodiments, for example, the only operation performed by the packer following the laser marking process described herein is the closing of the package. Any dust generated by the laser marking process that escapes the vacuuming process described below (if employed) is unlikely to have a significant adverse affect on the operation of the package closing station.

Furthermore, printing on eggs after they have been placed in packages minimizes the risk that the marked section of the egg will end up hidden from view by a consumer opening the package. That is, when an egg is printed prior to being put in a package, there is a good chance that the egg will be placed in the package by the packer in such a way that the image marked on the egg will be obscured or not visible at all unless the egg is rotated, flipped end-to-end, or otherwise reoriented. Marking eggs after they have been placed in packages can minimize the risk that an egg will be so oriented when a consumer (or anyone else) opens a given package.

Additionally, marking eggs after they have reached a particular packer ensures that only the eggs being processed by that packer will be marked with the desired information. Accordingly, marking eggs after they have been placed in packages allows unmarked eggs to be directed to any of numerous packers, or perhaps redirected to a different packer, at any time, without a concern that a given packer will receive an egg with inappropriate or unintended markings.

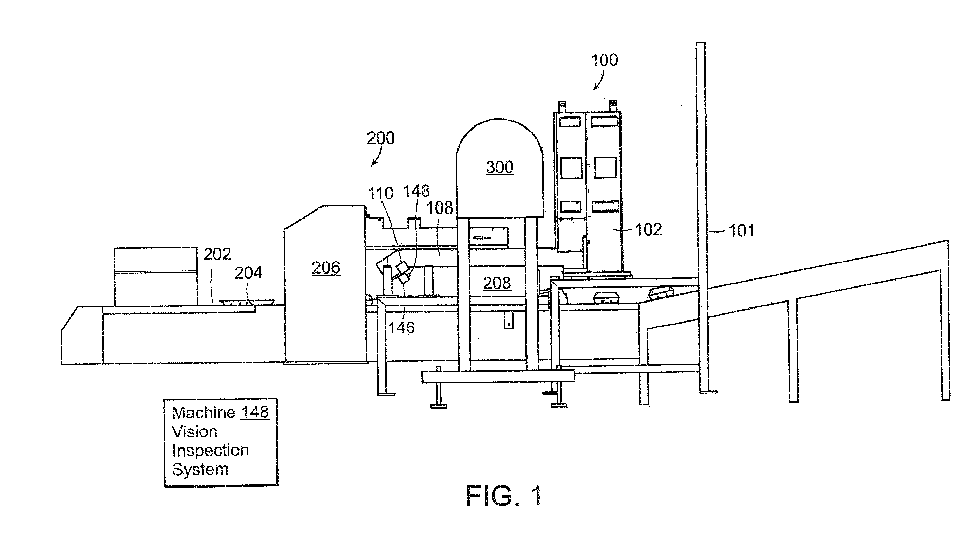

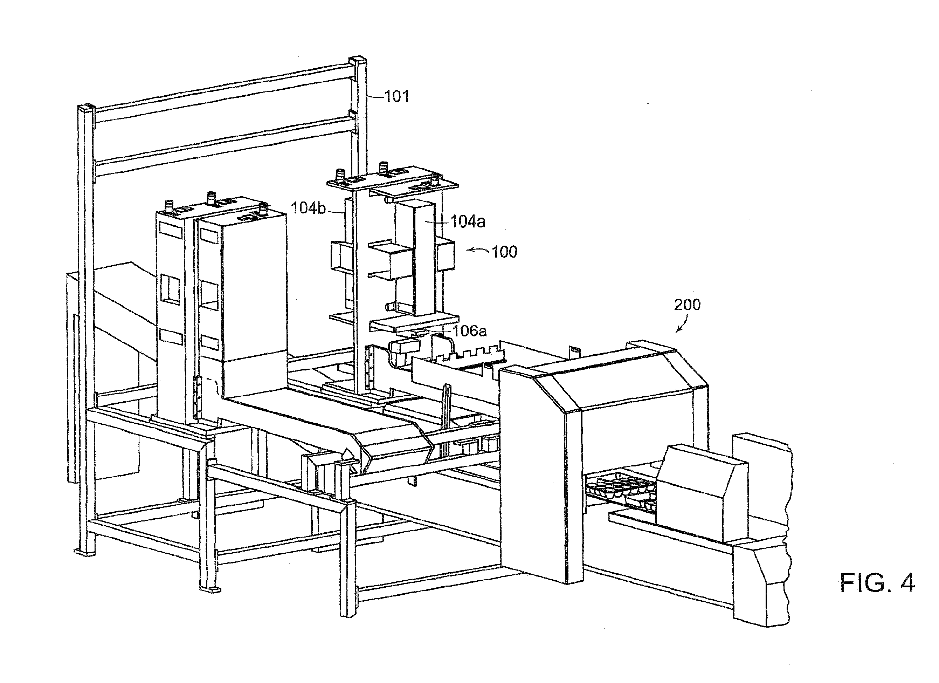

An example of a laser marking apparatus embodying various inventive features described herein is illustrated in Figs. 1-4. In the example shown, a laser marking apparatus 100 is configured to be retrofitted onto an existing egg packing apparatus 200, for example, of a type manufactured by Diamond Automations, Inc. It should be appreciated, however, that one or more, or perhaps even all, of the components of the laser marking apparatus 100 may additionally or alternatively be integrated into an egg packing apparatus, such as that shown, at the time of its manufacture. Additionally, it should be appreciated that the egg packing apparatus shown is but one example of an apparatus with which aspects of the invention may be employed and that various features of the invention may additionally or alternatively be employed in connection with any of a number of different types of apparatuses, as discussed above.

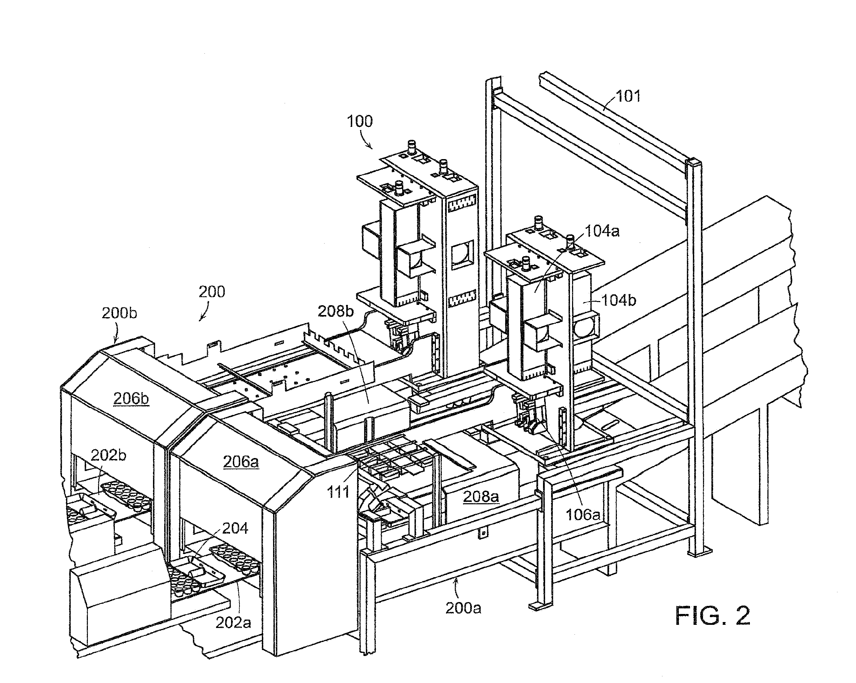

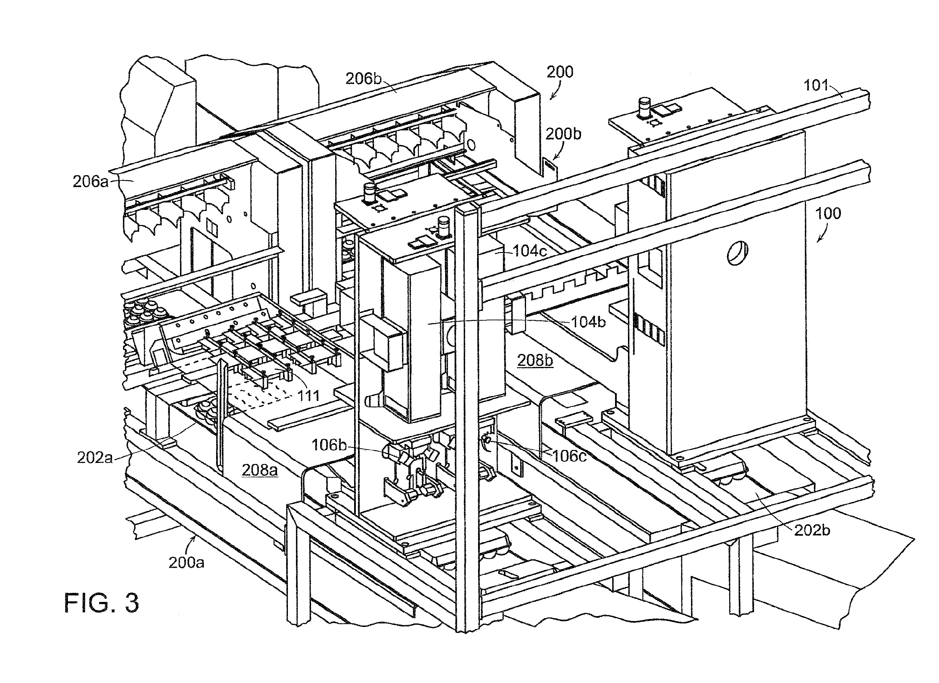

As shown in Figs. 2 and 3, the egg packing apparatus 200 may comprise a set of two identical egg packers 200a, 200b, each including a conveyor 202a, 202b (e.g., a belt conveyor, roller conveyor, chain conveyor, etc.). Each conveyor 202a, 202b moves empty packages 204 through a respective egg loading section 206a, 206b at which eggs are loaded into them from above, and then moves the filled packages to a respective package closing section 208a, 208b that is responsible for closing the lids of the packages 204. As shown in Fig. 1 and Fig. 2, eggs may be supplied to the egg packers 200a, 200b via a grader 300. Although only a cross-section of the grader 300 is shown, it should be appreciated that the grader 300 will typically be a fairly large piece of equipment, commonly on the order of 50 or 60 feet long in a direction perpendicular to the packer conveyors.

In the embodiment shown, the laser marking apparatus 100 comprises a pair of identical laser marking systems, one to service each of the two portions 200a, 200b of the egg packer 200. The frame 101 in the illustrated example may, for example, be used to support both portions of the laser marking apparatus 100. Alternatively, separate frames could be used. Because the configuration and operation of the two laser marking systems are essentially the same, only one of the two systems will be described. It should be understood, however, that the following description applies equally to both portions of the laser marking apparatus 100. In should also be appreciated that the existence of two side-by- side laser marking systems is not a requirement of the invention, and that different embodiments may employ fewer or greater numbers of such systems.

In the illustrated embodiment, a main housing 102 of one of the laser marking systems (shown in Fig. 1) contains a group of three laser sources 104a, 104b, 104c. Each laser source 104 may, for example, comprise a 70-100 watt carbon dioxide (CO₂) laser, or other laser having a wavelength on the order of 10,640 nano-meters, operated at 70-90% of rated power and delivering to the egg shell a power density (at an appropriate spot size) of up to about 2000 watts/sq. in. As shown, two-to-one beam splitters 106a, 106b, 106c may be used to divide laser energy from the laser sources 104 into multiple beams and mirrors may be used to direct the resulting six laser beams through a channel of a lower housing 108 (shown in Fig. 1) to a set of six two-dimensional laser-aiming mirrors (galvos) 110. In other embodiments, rather than employing beam splitters, a separate laser source may be employed for each galvo 110. Each galvo 110 may thus, for example, be responsible for lasing two eggs in a package of twelve, or three eggs in a package of eighteen, or more eggs in a larger package, or just a single egg. The spot size of the laser beams impinging on the eggs may, for example, be on the order of 4 millimeters (mm) diameter. This spot size may be generated, for example, by starting with a 2-2.5 mm coherent spot at the laser output and expanding it to about 3.75 mm via a collimating lens assembly followed by a 10- inch focusing lens. Any other arrangement (e.g., different laser output, up- collimator and focusing lens may be used to provide a suitably small spot size of the indicated power density and corresponding sweep rate (thus delivering equivalent energy density). With adjustments to sweep rate and spot size, more or less laser output power may be employed, while energy density is kept within a range that produces adequate etching of the egg shell to a depth of up to about 25 microns. Thus, the inventive systems and methods are not limited to a specific combination of parameters but to a combination that produces good results in terms of legible markings on the eggs.

Electronic control boards 111 contained within the lower housing 108 may include conventional circuitry (analog, digital, etc.) to control the operation of the laser sources 104 and the galvos 110. One or more sensors (not shown in Figs. 1- 4) may also detect the position of egg packages on the conveyor with respect to the galvos 110 and allow the control boards 111 to determine when a given package filled with eggs is in position for lasing. In other embodiments, one or more control boards 111 may additionally or alternatively be located elsewhere in the system for easier accessibility, to allow for better ventilation, etc.

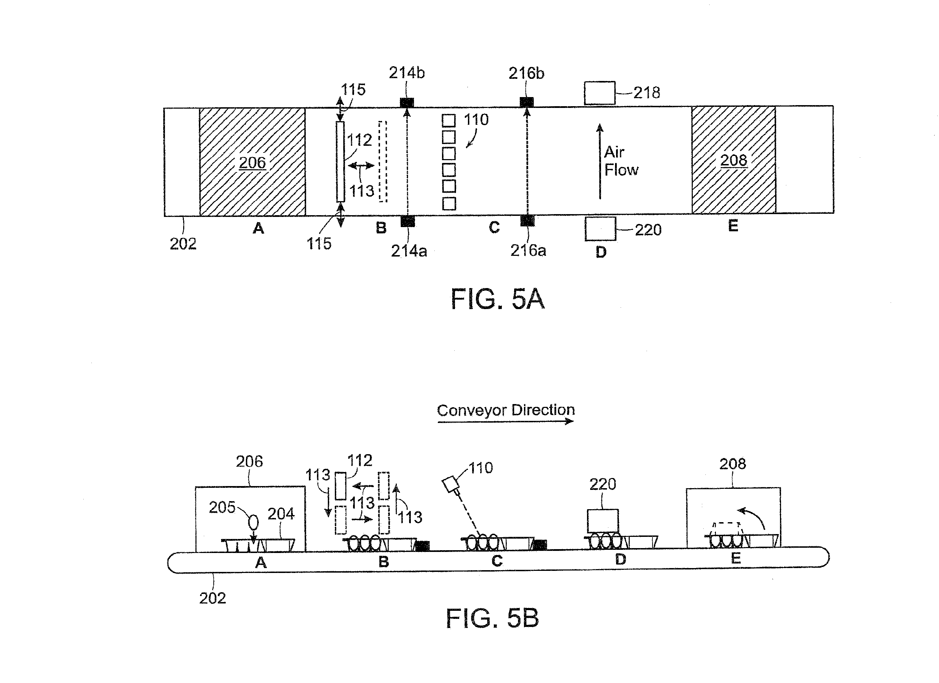

Figs. 5A and 5B are block diagrams showing, respectively, top and side views of a portion of the conveyor and related components that may be disposed between an egg loading section 206 and a package closing section 208 of one of the two portions of the egg packing apparatus 200, shown in Figs. 1-4. In the illustrative example shown, the conveyor is controlled so as to move packages 204 sequentially to each of five primary locations A-E. At each such primary location, moreover, the conveyor causes the package 204 to move sequentially through a series of sub-locations equal to the number of rows of eggs 205 (the reference 205 being to the eggs themselves) in the packages 204 being loaded. This occurs because the egg loading section 206 typically loads one row of six eggs 205 at a time, thus requiring the conveyor 202 to move the package slightly forward prior to loading each new row of eggs. A typical egg packer will process approximately 35 cases of eggs per hour, with each case including 30 dozen eggs. At this rate, the packages may, for example, spend approximately 5 seconds at each of the primary locations A-E before being moved by the conveyor 202 to the next such primary location. The packages may thus, for example, spend approximately 1-2 seconds at each of the sub-locations within each of locations A-E.

In the example shown, the conveyor 202 first moves the package 204 to a primary location A within the egg loading section 206 of the egg packing apparatus 200. As shown, when the package 204 stops at this section, a number of eggs 205 corresponding to the number of receptacles in the package 204 (e.g., twelve, eighteen, or more) are disposed into the package 204. As noted above, the eggs may be loaded one row (e.g., six eggs) at a time, with the conveyor 202 advancing the package 204 slightly to allow for subsequent rows to be loaded.

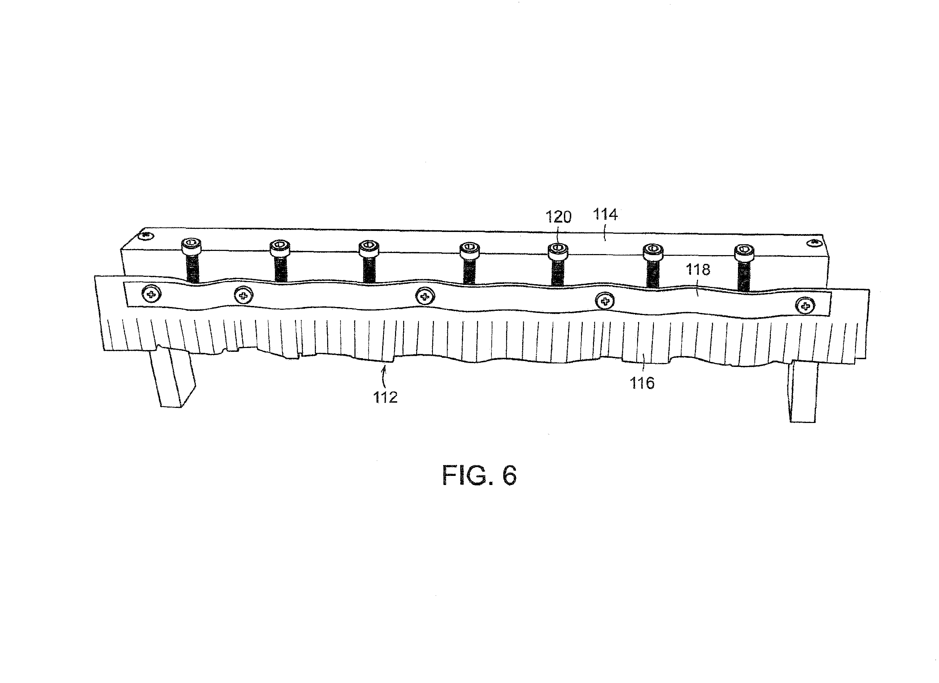

Next, the conveyor moves the package 204 to a location B where an operation is performed to orient the eggs to a desired position for laser marking as well as for display to a consumer who ultimately opens the package 204, or perhaps to an inspector or an employee of a retailer or distributor who later examines the eggs for inspection and/or repacking purposes. As shown, the eggs 205 may be oriented in a somewhat haphazard manner within the package at the time they reach the location B. Once they reach the location B, however, an egg orienter 112 may be operated so as to reorient the eggs into the desired position. The egg orienter 112 may be any of numerous devices capable of reorienting the eggs within the package, and the invention is not limited to any particular device or structure for performing such a function. One illustrative example of an egg orienter 112 suitable for this purpose is shown in Fig. 6. It should be appreciated that the egg orienter 112 may be located at any of numerous positions along the conveyor 202 and need not be located the particular location shown. In some embodiments, for example, the equipment at the positions B and C in Figs. 5A and B may be combined so as to operate on cartons of eggs located at the same position. Additionally, in some embodiments, the egg orienter 112 may be positioned to the right of the galvos 110 shown in Figs. 5A and 5B rather than to the left thereof.

As illustrated by arrows 113 adjacent the egg orienter 112 in Figs. 5A and 5B, the egg orienter 112 may first be moved (e.g., using via a pneumatic piston or another suitable actuator or motor - not shown in Figs. 5A and B) down behind the egg package 204 and then may be swept forward (in the direction of normal belt movement) across the rows of eggs 205 (typically two or three rows of six eggs each).

As illustrated by arrows 115 in Fig. 5A, as it is moved forward, the egg orienter 112 may also be shimmied (e.g., using a rotating pneumatic actuator or another suitable actuator or motor - not shown in Figs. 5A and B) in a side-to-side fashion so as to help overcome the friction between the eggs 205 and the receptacles of the package 204; or another mechanism may be employed for this purpose. Alternatively, other function-reduction approaches may be substituted. Finally, the egg orienter 112 may be raised and then moved back to its starting position until another row of eggs is moved into location B for processing. In some embodiments, the egg orienter 112 may be swept across the entire package of eggs in a single pass. Alternatively, it may be swept across one row of eggs 205 at a time each time the package 204 is moved to a new sub-location within location B.

As shown in Figs. 5A and 5B, one or more sensors (e.g., photo-electric eyes 214a-b) may be used, either alone or together with a belt tick monitor or the like, to track the precise position of the egg package 204 with respect to the egg orienter 112.

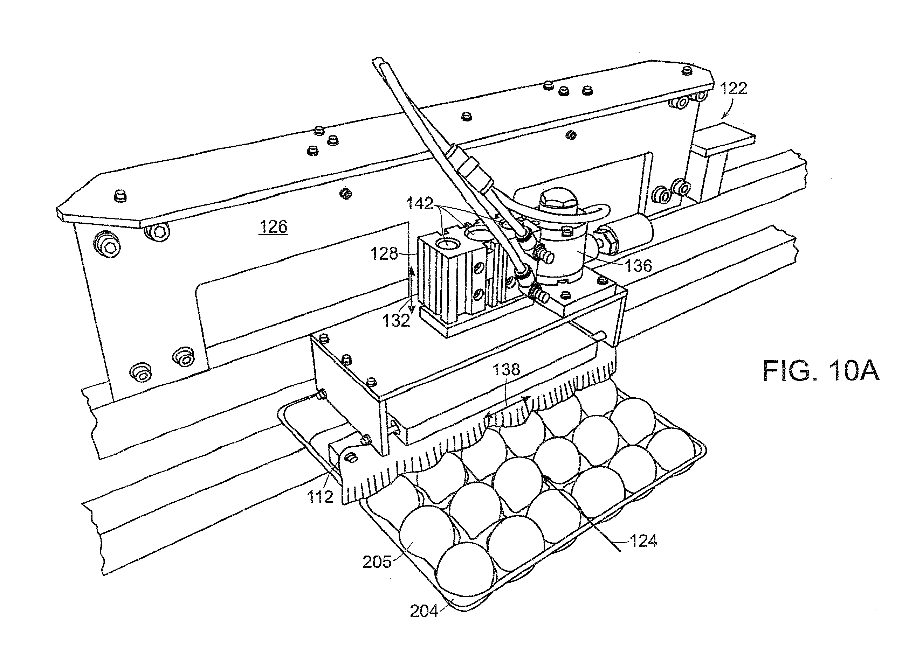

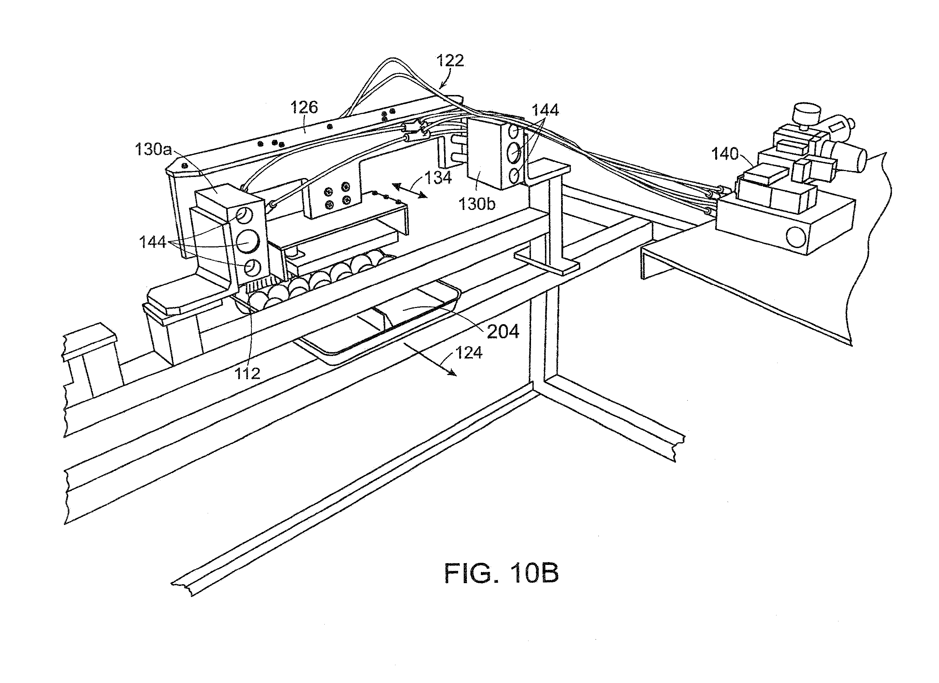

An example of a driving mechanism 122 that may be used to move the egg orienter 112 in a desired manner (e.g., as indicated by the arrows 113, 115 in Figs. 5A and B) is shown in Figs. 10A and 10B. The driving mechanism 122 may, for example, straddle the conveyor 202 at the location B (see Figs. 5A-B) so that packages of eggs pass underneath the egg orienter 112 in a direction indicated by the arrow 124 in Figs. 10A-B. As shown, the driving mechanism 122 may comprise a frame 126 that supports several double-acting pneumatic cylinders 128, 130a, 130b as well as a rotating pneumatic actuator 136. In the example shown, the pneumatic cylinder 128 and associated pistons 142 are responsible for moving the egg orienter 112 up and down (i.e., perpendicular to a plane of the conveyor 202) as indicated by the arrow 132 in Fig. 10A. Similarly, in the embodiment shown, the pair of pneumatic cylinders 130a and 130b and associated pistons 144 are responsible for moving the egg orienter 112 forward and backward over an egg package 204 (i.e., parallel to the direction of conveyor motion (see arrow 124)), as indicated by the arrow 134 in Fig. 10B. Also, in the embodiment shown, the rotating pneumatic actuator 136 is responsible for causing the egg orienter 112 to shimmy slightly from side to side as the egg orienter 112 is swept over the package 204 of eggs 205, as indicated by the arrow 138 in Fig. 10A.

As shown in Fig. 10B, the pneumatic components of the driving mechanism 122 may be connected to a compressor unit 140 (or other source of compressed air) that may be controlled so as to regulate the air flow to such components and thereby appropriately control their operation. Of course, embodiments that employ other types of actuators or motors (e.g., electric or hydraulic actuators or motors) may employ different types of control units to regulate movement of the egg orienter 112 in the desired manner.

As shown in Fig. 6, the egg orienter may comprise a frame 114 made of a suitable light-weight, sturdy material (e.g., aluminum) and a brush element 116 for sweeping across the tops of the eggs 205 in the package 204 to reorient them into the desired position. The brush element 116 may, for example, comprise a set of flexible but resilient fingers made of a suitable food-grade plastic, rubber, or other material. In the example shown, the brush element 116 is fastened to the frame 114 using a scallop-shaped aluminum member 118 to impart to the brush element 116 a corresponding scallop shape. Shaping the brush element 116 in this way allows nooks of the scallop shape to appropriately position the eggs 205 into the desired left-to-right position within the package 204.

In the embodiment shown, the egg orienter 112 further includes a set of tubes 120 disposed between nooks of the scallop- shaped aluminum member 118 and the frame 114. As shown, the tubes 120 may be arranged such that a pair of them straddles each egg 205 as the egg orienter 112 is swept across the tops of the eggs 205 in the package 204. Advantageously, a high- velocity air source (not shown) may be connected to the tubes 120 such that air may be blown onto and around the eggs 205 as the egg orienter 112 sweeps over the eggs 205 to reposition them. Blowing air over and around the eggs in such a fashion can help dry the surface of the eggs 205 uniformly prior to laser marking them and may also help overcome the friction between the bottoms of the eggs 205 and the package receptacles by creating a slight cushion of air between them.

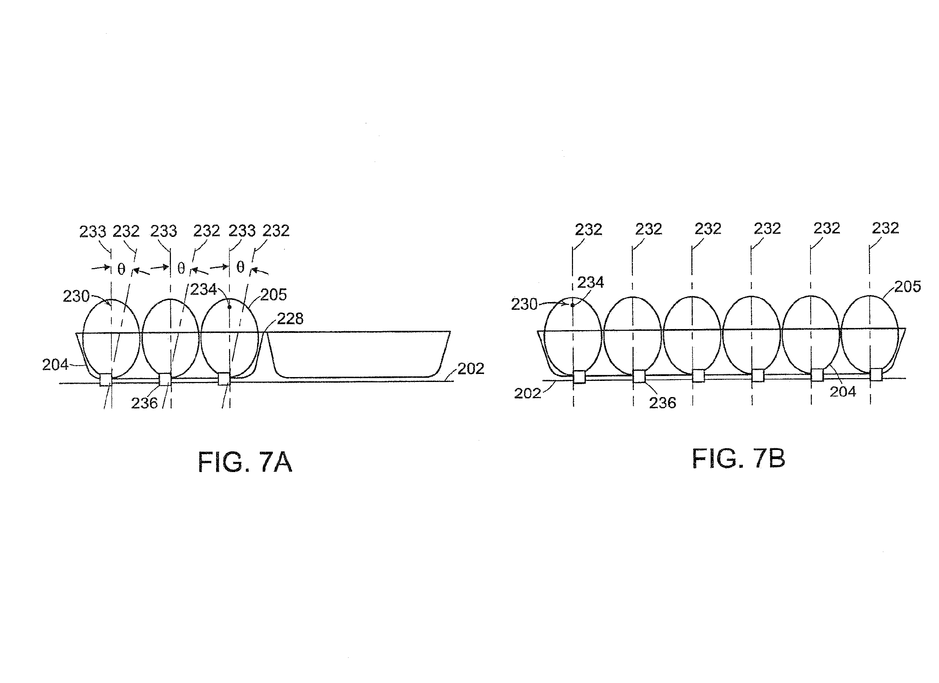

In the illustrative embodiment shown, after the egg orienter 112 has repositioned the eggs 205 within the package 204, the conveyor 202 moves the package 204 to a location C at which a laser marking operation may be performed. Figs. 7A and 7B illustrate how a group of eggs 205 may be oriented within a package 204 when the package 204 reaches the location C (as well as when the eggs ultimately reach a store, an end consumer, or some other post- packing location). Fig. 7A is a side view and Fig. 7B is a front view of a package 204 in which the eggs have been so oriented.

As shown, as a result of the processing by the egg orienter 112, the eggs 205 may be arranged uniformly within the package 204, with each egg 205 being tilted slightly toward the back 228 of the package 204 (see Fig. 7A) so that a large portion 230 of its surface area is exposed to the galvo 110 responsible for marking on it. In some embodiments, for example, the egg orienter 112 may manipulate the eggs 205 such that a long axis 232 of each egg is tilted at least slightly toward the back 228 of the package. For example, in certain embodiments, the egg orienter 112 may manipulate the eggs such that a long axis of each egg is offset from vertical (with "vertical" being defined as a line 233 normal to a plane coincident with a bottom portion 236 of the package (which, in Figs. 7A and 7B, is parallel to the surface of the conveyor 202)) by an angle Θ that is a minimum of 3 degrees. In other embodiments, each of the eggs 205 in the each carton 204 may be offset from vertical by a minimum angle Θ, typically from 1 to about 22 degrees, or greater. In some embodiments, the egg orienter 112 can manipulate the eggs 205 so that such angle Θ for each egg is approximately 10 degrees, or some other suitable angle that maximizes the surface area that is made available to the laser marking apparatus for writing.

As shown in Fig. 7B, the egg orienter 112 may additionally orient the eggs 205 so that the long axes 232 of all of the eggs in each row of six eggs form approximate right angles with respect to a line intercepting the bottoms of the receptacles holding the eggs in such a row. In some implementations, the long axes 232 of all of the eggs in a given package may be oriented such that each such long axis 232 is no more than about 20 degrees (or, in some embodiments, no more than about 25 degrees, or no more than about 24 degrees, or no more than about 23 degrees, or no more than about 22 degrees, or no more than about 21 degrees, or no more than about 19 degrees, or no more than about 18 degrees, or no more than about 17 degrees, or no more than about 16 degrees, or no more than about 15 degrees, or no more than about 14 degrees, or no more than about 13 degrees, or no more than about 12 degrees, or no more than about 11 degrees, or no more than about 10 degrees, or no more than about 9 degrees, or no more than about 8 degrees, or no more than about 7 degrees, or no more than about 6 degrees, or no more than about 5 degrees, or no more than about 4 degrees, or no more than about 3 degrees, or no more than about 2 degrees, or no more than about 1 degree) offset from any other such long axis.

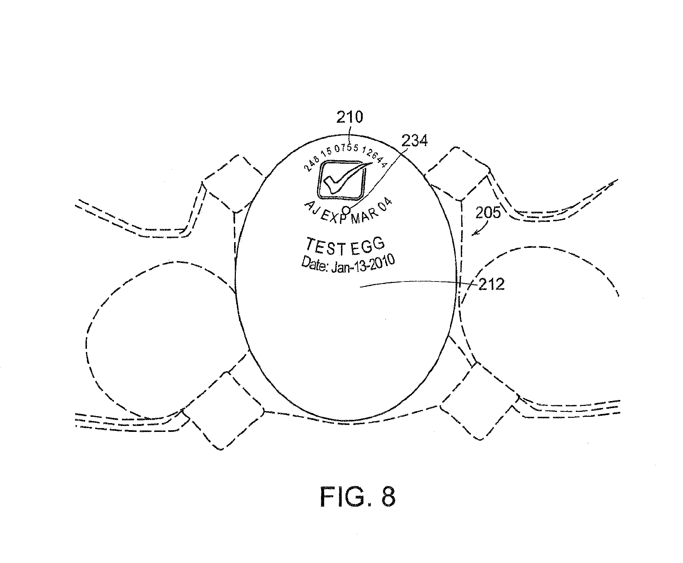

When the eggs 205 are oriented within the package 204 in such a manner, the surface of the egg 205 that is immediately apparent to someone opening the package is neither an end nor the middle of the egg 205, but rather a section of the egg somewhere between those two locations. Fig. 8 shows an example of an egg 205 having laser marking on it. As shown, a point 234 in the center of the marking (also shown in Figs. 7A and 7B) may be located between an end 210 and the middle 212 (i.e., the area located mid- way between the egg's two ends) of the egg 205. In some embodiments, the information marked on the egg may extend from the end 210 of the egg (or beyond) to the middle 212 of the egg (or beyond). As shown in Fig. 8, the information may be marked on the egg so as to extend horizontally with respect to the egg's long axis. In some embodiments, information may additionally or alternatively be marked so as to extend vertically generally in a direction of the egg's long axis. In some embodiments, the information laser marked on each egg may comprise one or more of a traceability code (uniquely identifying a specific egg or relatively small group of eggs - e.g., a carton), a company's logo and/or other advertising, an expiration date, grading information, and packing codes (e.g., a state code, a county code, a packer code and/or a Julian date). The eggs in a carton may be marked with as little or as much information in common as is desired. Thus, a message can, in fact, be piece-wise printed across multiple eggs.

In some embodiments, eggs may be oriented in each package and information may be marked on the eggs in such a way that the information marked on all of the eggs in each package can be viewed immediately upon opening the package, without requiring a human being to manipulate any of the eggs to allow such information to be viewed.

It is known that a significant percentage the eggs that are produced have the salmonella virus on them. For this and other reasons, various regulations exist governing when and how eggs may be manipulated. Allowing inspection of laser marked information on all of the eggs in a given package without needing to manipulate any of the eggs in the package can thus provide significant advantages.

In the illustrative embodiment shown in Figs. 1-6, during each interval of approximately 1-2 seconds wherein the package is at a sub-location within the primary location C, each of the six galvos 110 may be controlled to mark on a respective one of six eggs in a given row. Accordingly, in some implementations, each galvo 110 may have approximately 1-2 second to complete the marking on each egg 205 for which it is responsible. As shown in Figs. 5A and 5B, one or more sensors (e.g., photo eyes 216a-b) may be used, either alone or together with a belt tick monitor or the like, to track the precise position of the egg package 204 with respect to the galvos 110.

In some embodiments, a vector-based process may be used to laser mark on the eggs 205. In other embodiments, however, a dot matrix, raster, or other laser marking process may additionally or alternatively be employed.

In some embodiments, each egg 205 may be marked in multiple passes (e.g., two, three, or four times) during the available marking interval of approximately 1-2 seconds. We have discovered that marking quality on egg shells may be improved significantly by using a relatively low power (density) laser beam and marking in multiple passes. In some embodiments, this may be accomplished by using a combination of laser power and output beam width, optics and one or more beam splitters to divide the power from one or more laser sources so as to obtain laser beams having the desired power density level and spot size. We believe it is the discoloration of the outer layer of the egg, rather than a deep etching of the egg shell (which is typically on the order of 300 microns thick), that allows good marking quality to be achieved. Indeed, when exposed to a laser beam at too high a power or for too long a duration, the outer protein layer of an egg shell can be etched away completely, thereby compromising mark quality. Accordingly, in some embodiments, the power, beam sweeping rate, and/or number of passes may be adjusted to achieve good discoloration without too deeply etching the surface of the eggs. In some embodiments, a laser power of less than about 80 watts with the indicated optics and spot size (or, in some embodiments, less than about 75 watts, or less than about 70 watts, or less than about 65 watts, or less than about 60 watts, or less than about 55 watts, or less than about 50 watts, or less than about 45 watts, or less than about 40 watts, or below) is applied to the eggs. In some embodiments, for example, such variables are controlled such that the resulting etching in the egg is no greater than about 25 microns deep.

It may be possible to achieve a better marking quality by varying the power, spot size and/or beam sweeping rate that is employed during each of respective multiple passes so as to ensure at least one such pass is performed at a power and/or rate that will achieve good discoloration. In some embodiments, the laser beam may be modulated during the laser marking process to improve the mark quality. For example, the power may be reduced or the rate may be increased at points where one line crosses another (e.g., when writing the letter "X") so as to avoid an excessive amount of energy being delivered at the point of overlap.

In some embodiments, the image to be marked on the eggs may be digitally processed (e.g., pre-distorted) in advance of lasing the eggs 205 to account for the actual or expected curvature of the eggs in question. Taking such a step may result in an image that does not appear distorted in spite of being marked onto a non-planar surface.

In some implementations, one or more additional laser sources and/or galvos may be also be arranged and configured to mark on one or more different portions of the egg, e.g., a back side, in addition to the front-side location discussed above. In some embodiments, for example, it may be desirable to mark certain information of immediate importance to a consumer, e.g., an expiration date and/or brand identification, on a front portion of the eggs so that such information is immediately visible to a consumer upon opening the box, and to mark other information of less immediate importance, e.g., tracking codes or the like, on the back side of the eggs.

As shown in Figs. 5A and 5B, after the laser marking process is complete for a given package 204, the conveyor 202 may move the package 204 to a location D at which a vacuum 218 nozzle connected to a vacuum source (not shown), together with a blower nozzle 220 connected to a air source (not shown), may be used to remove dust generated by the lasing process and any other unwanted particles from the packages of eggs before they are closed by the package closing section 208 of the egg packer 200. In some embodiments, the vacuum source and/or the air source may be located apart from the laser marking apparatus 100 (e.g., on a roof of a building in which the apparatus 100 is located) and connected to the nozzles 218, 220 via appropriate tubes or ductwork (not shown).

In some implementations, a machine vision system 146, 148 (shown in Fig. 1) may be configured and arranged so as to examine the position and/or characteristics of the eggs that are to be marked and/or the quality and integrity of the information that is marked onto the eggs. As shown in Fig. 1, in some embodiments, one or more machine vision observation units 146 may, for example, be disposed adjacent beam projectors 148 of one or more galvos. In other embodiments, the one or more observation units 146 may be located elsewhere to allow for adequate observation. The one or more observation units 146 may be connected to one or more machine vision inspection system computers 148 using any suitable technique. Each of the one or more machine vision inspection computers 148 may be local to the system 100 or may be in a remote location.

The egg processing system in question could, for example, be stopped if the machine vision system determines that the mark quality has fallen below a certain threshold. Such a system may be closed-loop in some embodiments, such that feedback from the machine vision system may be used to control the galvos 110 and/or the laser sources 104 so as to improve the quality and reliability of the process. For example, feedback from a machine vision system might adjust the number of passes made by the galvos, the rate at which the galvos scan, the power level of the laser, etc., in order to ensure a desired contrast level is achieved during the laser marking process. Additionally or alternatively, a machine vision system may examine the size, color, or other perceptible properties of the eggs to be marked and make appropriate adjustments to the laser marking components and/or process to account for such variables and thereby ensure that image quality stays consistent in spite of such variations.

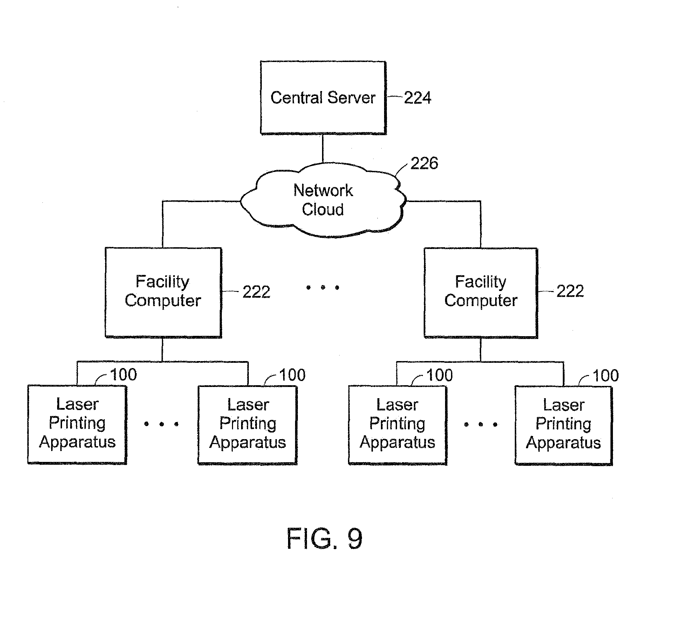

In some embodiments, it may be useful to allow for centralized control and monitoring of the operation of multiple different laser marking apparatuses 100 distributed throughout one or more facilities. Fig. 9 illustrates an example of a system that would allow for such centralized control. As shown, respective groups of laser marking apparatuses 100 may be coupled to corresponding facility computers 222 so as to allow the facility computers to control the queuing of laser marking jobs to the control boards 111 of the various laser marking apparatuses 100 as well as to monitor the health and status of such apparatuses. Laser marking apparatuses 100 may thus behave essentially as network printers for the facility computers 222. Each facility computer 222 may, for example, be located at a respective egg processing facility.

Central server 224 may, in turn, be coupled via a network cloud 226 to the group of facility computers 222 to allow the central server 224 to distribute laser marking jobs to the various facility computers 222 and to monitor the status of those jobs. The network cloud 226 may comprise any of a number of network types, and may be distributed either over a local or wide area. In some embodiments, the network cloud 226 may, for example, comprise the Internet. When facilities are located in different geographic regions, different laser marking jobs may, for example, be distributed to the facility computers 222 at the different facilities depending on the region. If, for example, Major League Baseball decided to contract to have team logos marked on eggs, instructions could be sent to the facilities that distribute eggs to the New England area to mark the logo of the Boston Red Sox on a given number of eggs at those facilities whereas instructions could be sent to facilities that distribute eggs in the state of Florida to mark the logo of the Florida Marlins on a certain number of eggs at those facilities.

In some embodiments, the galvos 110 may be independently controlled such that different images may be marked on different eggs in the same package. For example, the galvos 110 could be controlled such two eggs in a first row of a package have the letters "G" and "O" marked on them and six eggs in the second row of the package have the letters "R," "E," "D," "S," "O," and "X" marked on them. In some embodiments, each egg 205 may even be marked with a unique identifier that allows it to be differentiated from every other egg that is laser marked using the system.

### Ink printing

Ink printing thus far has not been satisfactory for marking eggs with indicia desired to be permanent and (for practical purposes) unalterable in the chain of distribution. Such indicia may include, for example, a traceability code and/or a freshness date, or an origin code - information used to provide assurances of food safety and/or tracking of the egg's path as it was handled. While suitable ink compositions may at some time become available which can substitute for laser marking, currently laser marking is the preferred way of applying such indicia. The integrity of other indicia, such as advertising, for example, is not subject to the same stringent requirements. For example, food safety is not adversely impacted if an advertisement in a water soluble ink washes off an egg or smears. Thus, such indicia which need not be permanent could be applied by non- permanent means without seriously detracting from the characteristics of the egg, including an egg bearing permanent markings. Therefore, advertising, for example, could be applied by ink printing in addition to any laser-applied markings.

When laser printing and ink printing are used together, it is important to note that laser marking (etching) of the egg reduces the thickness of the shell where the laser beam performs its writing. Thus, it may be desired that care be taken to assure that ink will not be applied to the thus thinned places on the egg shell, if there is concern that the ink would more easily bleed through the shell in those locations and contaminate the egg's yolk or albumen. Such a precaution may prove to be unnecessary, however, as natural fissures in an egg's shell may be 90 microns deep and lasing as taught herein only removes about 25 microns or less. This result may be obtained either by doing the ink printing before the laser printing or by taking care to assure that ink is not applied to areas that previously were laser-printed. When the ink printing is done first, if the composition of the ink is non-volatile, the laser beam can ablate the ink from locations where laser marking is to be provided; taking this to a logical conclusion, ink may be applied to provide a colored background field and then the egg may be marked by laser- ablating the ink to allow the egg shell to appear in contrast against the surrounding ink. This kind of "reverse" printing may reduce some of the constraints on the ink- application apparatus.

Applying ink markings to eggs in high-speed, commercial egg production, previously has been done using special ink jet printers such as the model EJP Online Multi-Head Egg Jet Printer from Advanced Industrial Micro Systems of Mumbai, India, while the eggs are moving down a conveyor, in-carton. This printer uses water-soluble inks.

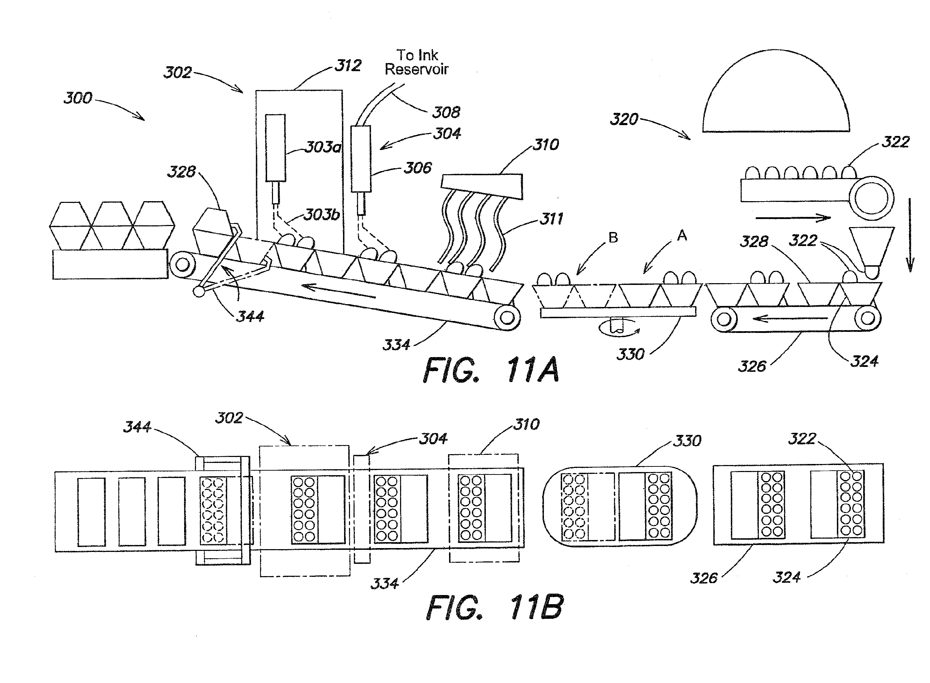

Turning to Figs. 11A and 11B, there is shown an example of an egg marking system 300 employing the concepts disclosed herein in connection with both a laser marking station 302 and an ink marking station 304. One can either dispose an ink jet printing station 304 upstream of (i.e., before) a laser printing station 302 as in Fig. 11A or downstream of a laser printing station (not illustrated). It is contemplated that when ink jet printing is employed, one or more ink jets will be provided per egg being marked, and that all eggs in a row of a carton will be marked at the same time. Thus, while Fig. 11A shows just one ink head 306, more typically a group of print heads will be ganged together to mark a row of eggs. The required ink reservoir(s) can supply ink to the ink heads via conduits 308.

An orienter 310 as described herein may be used to position the eggs in the package before printing is performed, so that eggs do not shift position very much between the two printing stations. In this embodiment of an orienter, a series of resilient or sweeping members 311, depending from a support structure, urge the eggs into a tilted backward orientation. Thus, the desired relative printing positions for the two stations can be achieved without requiring complicated registration mechanisms.

To combine laser marking of eggs with ink jet printing using permanent inks is complicated by safety concerns. It is not simply a matter of substituting for water-soluble inks those which have a different chemical composition, because those different compositions normally involve a volatile component which creates a flammable or explosive atmosphere as the ink is applied and dries. The energy from a laser beam can ignite the volatile vapors, potentially causing fire and even an explosion. Aside from using ink compositions which will not emit dangerous volatile vapors, one can reduce the risk of ignition of the volatile vapors in a number of ways. For example, as shown in Fig. 11A, the lasing station(s) 302 (i.e., the area in which the eggs are actually marked by the laser beams) may contain one or more lasers 303a or at least laser beams 303b shrouded by a housing 312 wherein a positive pressure of a clean air (or inert gas) environment is maintained, so that the level of volatile vapors is maintained below that which is combustible. Or the lasing station(s) and ink printing station(s) may be separated by several (e.g., 15 - 20 or more) feet and an exhaust system (not shown) may draw away the volatile vapors to a degree sufficient to reduce the level of volatile vapors exposed to the laser beams to one which is well below a combustible mixture. Or, alternatively, an inert gas may be pumped into the lasing station so as to keep the oxygen level low and avoid a combustible mixture.

### Additional Embodiments

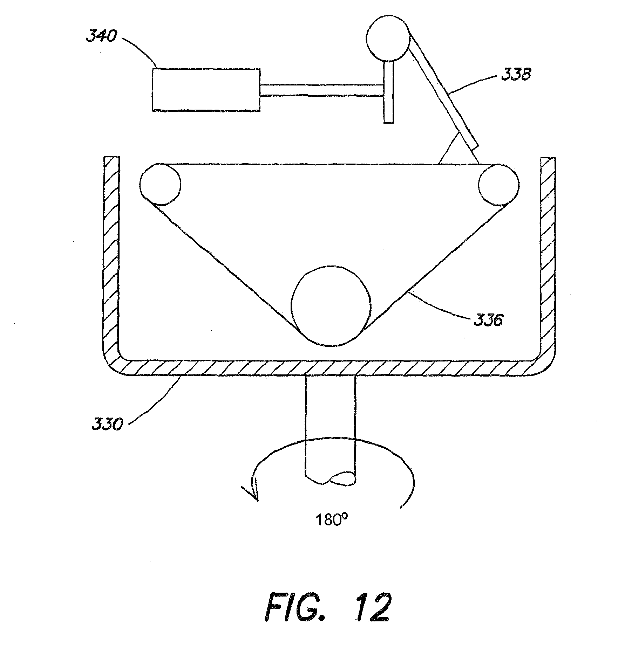

The above-described package conveying and egg printing arrangements may be modified in various respects. Among them is an arrangement, shown schematically in Fig. 11A (leaving out as much detail as possible), wherein gravity can be used to assist in orienting the eggs as desired and in maintaining the orientation thereafter. A grading and packing system 320 drops eggs 322 into egg cartons or packages 324 as they pass on a conveyor 326, with the hinged lids 328 of the cartons arranged toward the downstream (in this drawing, leftward) end of conveyor 326. When each carton reaches the end of conveyor 326, the conveyor deposits the carton onto a rotatable tray 330. The tray 330 then is rotated 180 degrees, moving the carton 324 from position A to position B, wherein the hinged lid is now arranged toward the upstream end of conveyor 326. The carton is then transferred to an upwardly slanted conveyor 334. Various mechanisms can be employed to transfer the carton from the rotating tray to the downstream conveyor 334. For example, a portion of the tray may include a small conveyor mechanism 336, as diagrammatically indicated in the simplified cross-section of a tray mechanism in Fig. 12. Alternatively, a supplementary mechanism can be used to effectuate the transfer, such as a pivoted pusher blade 338 and appropriate driving apparatus (e.g., a hydraulic cylinder or solenoid 340), or any other desired mechanism. Likewise, a mechanism other that a rotating tray can be used to reverse the directions of the packages and if the grader/packer supplying the eggs in cartons delivers packages with the lids open and upstream of the bottom of the package containing eggs, a reversing mechanism is unnecessary.

An orienter station 310 may then operate upon the eggs in the carton to achieve the above-described orientation. From the orienter, conveyor 334 carries the egg carton to an ink jet printing station 304, if used, and thereafter into a lasing station 302. (Or to a lasing stating first and then to an ink printing station. There are advantages and disadvantages to both sequences. Moreover, each of the printing stations may be considered optional as printing may be limited to only laser printing or only ink printing, in some embodiments.) At the output of the lasing station, a closer mechanism 344 pivots the lid 328 to close the carton. The conveyor 334 may discharge the closed egg cartons onto a flat surface which is stationary, or onto another conveyor, from which the cartons may be removed and packed into boxes or crates.

The lasing station may include a housing 312 in which a non- volatile environment is maintained by appropriate apparatus, not shown. The laser devices may be contained within housing 312 or be external to that housing, with the laser beams conducted into the housing 312 via an enclosed path to which the ink volatiles are excluded.

Once the eggs are tilted backwardly in the cartons by the orienter, the upward slant of conveyor 334 provides an additional force urging the eggs to stay tilted back even while the conveyor jostles the packages. This approach is particularly helpful with respect to small eggs, and when the stopping and starting of the conveyor imparts enough force to overcome the friction begin and egg and the carton. On a horizontal surface, such an egg might fall forward in the carton, out of aligned orientation.

The type of embodiment shown in Figs. 11A, 11B can be used with the majority of existing egg grading systems as it is merely added on to the output of the grading. It is substantially a "one size fits all" approach.

The egg orienting operation is not limited to the above-discussed embodiment, but also may be performed by alternative apparatus. It may also be noted that it may be desirable to break the operation into two stages: (1) to orient, loosen and tilt the eggs and (2) to straighten the eggs from side to side. One apparatus can perform both operations or separate apparatus can be used for each.

If the eggs are on the small side, which is common, and the conveyor is horizontal or only tilted a small amount, then as the carton is moved from one location into the next location (which may be the next station or just the next row or next carton printing position) they can jostle or even fall forward as the conveyor chain stops suddenly. Optionally, therefore, there may be included as part of the orienter two semi-flexible rods which may be brought down on either side of the egg and rotated so as to tend to straighten the eggs from side to side and also to push an egg backward as the rods are moved backward over the carton. These rods can be made small enough in diameter to not be in the way of the printing process and flexible enough to not damage the egg.

In another type of embodiment, the suspended resilient members of the orienter may comprise a plurality of suspended brushes or weighty, flat textile strips hanging down from a frame which drags them against the eggs in a motion similar to that employed in the above-described embodiment, to urge the eggs into the desired parallel, tilted positioning.

The orienter mechanism and process have been shown as applied to eggs, but it should be appreciated that it may be desirable to perform a similar operation on other objects, whether printing on them or not. For example, one might desire to orient other food objects similarly for packaging and/or labeling. These food objects might include produce such as apples and pears or bell peppers or any of a number of other fruits or vegetables. They might also include manufactured food products such as chocolates and candies that the manufacturer wishes to place uniformly into packages, or non-food products such as Christmas tree ornaments.

Having thus described certain embodiments of systems and methods for practicing aspects of this invention, it is to be appreciated that various alterations, modifications, and improvements will readily occur to those skilled in the art. Such alterations, modifications, and improvements are intended to be part of this disclosure, and are intended to be within the spirit and scope of the invention. For example, in embodiments wherein open egg packages are fed in the opposite direction onto the conveyor 202 shown in Figs. 5A and 5B, i.e., such that the receptacle section leads the lid section, the loop-wise movement of the egg orienter 112 may be unnecessary, as the appropriate orientation of the eggs within the package 204 could be achieved simply by allowing the open packages of eggs to pass underneath the egg orienter 112 (with or without causing it so shimmy slightly from side-to-side to help overcome friction). In such embodiments, because the tops of the eggs 205 would be caused to be tilted slightly to the right (as depicted in Fig. 5B), it would also be desirable to orient the galvos 110 so that they face slightly toward the back of the conveyor 202, thus allowing them to mark onto the large exposed surface area 230 of the eggs 205 obtained using this alternative technique. Accordingly, the foregoing description and drawings are by way of example only.

In the following, various exemplary modes of the application are described. The modes may be combined with each other even in combinations not indicated below.

Mode 1 relates to a method for laser marking an egg shell, comprising a step of: (a) controlling a laser beam directed onto the egg shell so as to discolor an outer layer of the egg shell without etching substantially into layers of the egg shell underneath the outer layer.

Mode 2 relates to the method of mode 1, wherein the step (a) comprises sweeping a laser beam having an energy density of less than about 2000 watts/sq. in. multiple times along a surface of the egg shell.

Mode 3 relates to the method of mode 2, wherein the step (a) further comprises sweeping the laser beam along the surface of the egg shell at different rates during at least two of the multiple times.

Mode 4 relates to the method of mode 1, wherein the step (a) comprises sweeping a laser beam having an energy density of less than about 1600 watts/sq. in. multiple times along a surface of the egg shell.

Mode 5 relates to the method of mode 1, wherein the step (a) comprises controlling the laser beam such that the egg shell is etched no more than about 25 microns deep.

Mode 6 relates to a method for laser marking an egg, comprising steps of:
(a) directing a laser beam onto an egg at an energy density level not exceeding 2000 watts/sq. in.

Mode 7 relates to the method of mode 6, further comprising a step of:
(b) with the laser beam, laser marking information onto the egg in multiple passes.

Mode 8 relates to the method of mode 7, wherein the step (b) comprises using different rates to laser mark the eggs during at least two of the multiple passes.

Mode 9 relates to the method of mode 7, wherein the step (a) comprises directing the laser beam onto the egg with an energy density not exceeding 1600 watts/sq. in.

Mode 10 relates to the method of mode 6, wherein the step (a) comprises directing the laser beam onto the egg with an energy density not exceeding 1600 watts/sq. in.

Mode 11 relates to an egg having laser marking thereon, wherein a depth of an etching of the egg caused by the laser marking process does not exceed 25 microns.

Mode 12 relates to a method for processing a package of eggs, comprising a step of:
(a) after the eggs have been placed in the package, mechanically adjusting a position of one or more of the eggs so that each of the eggs assumes a particular orientation within the package.

Mode 13 relates to the method of mode 12, further comprising a step of:
(b) after performing the step (a), marking information on a surface of one or more of the eggs while the eggs are in the package.

Mode 14 relates to the method of mode 12, further comprising a step of:
(b) after performing the step (a), laser marking information on a surface of one or more of the eggs while the eggs are in the package.

Mode 15 relates to the method of mode 14, wherein the steps (a) and (b) are performed such that, for at least one egg that is marked, a center point of the information marked on the egg is located between the middle and an end of the egg.

Mode 16 relates to the method of mode 14, further comprising a step of:
(c) prior to performing the step (b), blowing air onto the eggs while the eggs are disposed in the package.

Mode 17 relates to the method of mode 16, wherein the step (c) comprises blowing the air onto the eggs while performing at least a portion of the step (a).

Mode 18 relates to the method of mode 12, wherein the step (a) is performed while the eggs are in a package disposed on a section of a conveyor of an egg packer.

Mode 19 relates to the method of mode 18, wherein section of the conveyor is located between an egg packing section and a package closing section of the egg packer.

Mode 20 relates to the method of mode 18, wherein the step (a) is performed using an egg orienter positioned above the conveyor.

Mode 21 relates to the method of mode 20, wherein the egg orienter comprises a plurality of resilient members configured and arranged to be moved relative to the eggs in the package so as to urge them to predetermined orientations.

Mode 22 relates to the method of mode 12, further comprising a step of:
(b) blowing air onto the eggs while performing at least a portion of the step (a).

Mode 23 relates to the method of mode 12, wherein the step (a) further comprises adjusting the position of the one or more eggs in the package so that a long axis of each egg in the package is offset no more than 20 degrees from a long axis of each other egg in the package.

Mode 24 relates to the method of mode 12, wherein the step (a) further comprises adjusting the position of the one or more eggs in the package so that a long axis of each egg in the package is offset no more than 10 degrees from a long axis of each other egg in the package.

Mode 25 relates to the method of mode 12, wherein the step (a) further comprises adjusting the position of the one or more eggs in the package so that a long axis of each egg in the package is tilted toward the back of the package so as to be at least slightly offset from vertical.

Mode 26 relates to the method of mode 25, wherein the step (a) further comprises adjusting the position of the one or more eggs in the package so that the long axis of each egg in the package is offset no more than 20 degrees from the long axis of each other egg in the package.

Mode 27 relates to the method of mode 25, wherein the step (a) further comprises adjusting the position of the one or more eggs in the package so that the long axis of each egg in the package is offset no more than 10 degrees from the long axis of each other egg in the package.

Mode 28 relates to the method of mode 25, wherein the step (a) further comprises adjusting the position of the one or more eggs in the package so that long axes of all of the eggs in each row of eggs in the package form approximate right angles with respect to a line intercepting bottoms of receptacles holding the eggs in such a row.

Mode 29 relates to the method of mode 12, wherein the step (a) further comprises adjusting the position of the one or more eggs in the package so that a long axis of each egg in the package is tilted toward the back of the package so as to be offset from vertical by a minimum of 3 degrees.

Mode 30 relates to the method of mode 12, wherein the step (a) further comprises adjusting the position of the one or more eggs in the package so that a long axis of each egg in the package is tilted toward the back of the package so as to be offset from vertical by a minimum of 10 degrees.

Mode 31 relates to the method of mode 12, wherein the step (a) further comprises adjusting the position of the one or more eggs in the package so that long axes of all of the eggs in each row of eggs in the package form approximate right angles with respect to a line intercepting bottoms of receptacles holding the eggs in such a row.

Mode 32 relates to the method of mode 12, wherein:
the step (a) is performed while the eggs are in a package disposed on a section of a conveyor of an egg packer; and
the method further comprises a step of (b) after performing the step (a), laser marking information on a surface of one or more of the eggs while the eggs are in the package and while the package is substantially stationary on the conveyor.

Mode 33 relates to an apparatus for processing packages of eggs on a conveyor, comprising: an egg orienter configured and arranged with respect to the conveyor so as to adjust a position of one or more of the eggs in each of the packages so that each of the eggs in a given package assumes a particular orientation within that package.

Mode 34 relates to the apparatus of mode 33, further comprising:
a laser source; and
one or more optical steering elements configured and arranged to direct laser energy from the laser source so as to laser mark information on a surface of one or more of the eggs while the eggs are in a package disposed on the conveyor and in said particular orientation.

Mode 35 relates to the apparatus of mode 34, wherein the one or more optical steering elements are further configured and arranged to laser mark the information such that, for at least one egg that is marked, a center point of the information marked on the egg is located between the middle and an end of the egg.

Mode 36 relates to the apparatus of mode 34, further comprising an air source configured and arranged to blow air onto the eggs in each package before the one or more optical steering elements direct laser energy onto any of the eggs in that package.

Mode 37 relates to the apparatus of mode 36, wherein the air source is configured and arranged to blow air onto the eggs in each package during at least a portion of the time that the egg orienter is adjusting a position of the one or more eggs in that package.

Mode 38 relates to the apparatus of mode 36, wherein the egg orienter is positioned above the conveyor.

Mode 39 relates to the apparatus of mode 33, wherein the conveyor is a belt conveyor of an egg packing station.

Mode 40 relates to the apparatus of mode 33, wherein the egg orienter is configured and arranged to blow air onto the eggs in each package during at least a portion of a time that the egg orienter is adjusting a position of the one or more eggs in that package.

Mode 41 relates to the apparatus of mode 33, wherein the egg orienter is further configured and arranged to adjust the position of the one or more eggs in each of the packages so that a long axis of each egg in a given package is offset no more than 20 degrees from a long axis of each other egg in the same package.

Mode 42 relates to the apparatus of mode 33, wherein the egg orienter is further configured and arranged to adjust the position of the one or more eggs in each of the packages so that a long axis of each egg in a given package is offset no more than 10 degrees from a long axis of each other egg in the same package.

Mode 43 relates to the apparatus of mode 33, wherein the egg orienter is further configured and arranged to adjust the position of the one or more eggs in each of the packages so that a long axis of each egg in a given package is tilted toward the back of the package so as to be at least slightly offset from vertical.

Mode 44 relates to the apparatus of mode 43, wherein the egg orienter is further configured and arranged to adjust the position of the one or more eggs in each of the packages so that the long axis of each egg in a given package is offset no more than 20 degrees from the long axis of each other egg in the same package.

Mode 45 relates to the apparatus of mode 43, wherein the egg orienter is further configured and arranged to adjust the position of the one or more eggs in each of the packages so that the long axis of each egg in a given package is offset no more than 10 degrees from the long axis of each other egg in the same package.

Mode 46 relates to the apparatus of mode 33, wherein the egg orienter comprises a plurality of resilient members configured and arranged to be moved relative to the eggs in each package so as to urge them to predetermined orientations.

Mode 47 relates to the apparatus of mode 33, wherein the conveyor is a belt conveyor.

Mode 48 relates to the apparatus of mode 33, wherein the egg orienter is located between an egg loading section and a package closing section of an egg packer.

Mode 49 relates to the apparatus of mode 33, wherein the egg orienter is further configured and arranged to adjust the position of the one or more eggs in each of the packages so that a long axis of each egg in a given package is tilted toward the back of the package so as to be offset from vertical by a minimum of 3 degrees.

Mode 50 relates to the apparatus of mode 33, wherein the egg orienter is further configured and arranged to adjust the position of the one or more eggs in each of the packages so that a long axis of each egg in a given package is tilted toward the back of the package so as to be offset from vertical by a minimum of 10 degrees.

Mode 51 relates to the apparatus of mode 33, wherein the egg orienter is further configured and arranged to adjust the position of the one or more eggs in the package so that long axes of all of the eggs in each row of eggs in the package form approximate right angles with respect to a line intercepting bottoms of receptacles holding the eggs in such a row.

Mode 52 relates to the apparatus of mode 43, wherein the egg orienter is further configured and arranged to adjust the position of the one or more eggs in the package so that long axes of all of the eggs in each row of eggs in the package form approximate right angles with respect to a line intercepting bottoms of receptacles holding the eggs in such a row.

Mode 53 relates to the apparatus of mode 34, wherein the one or more optical steering elements are further configured and arranged to direct laser energy from the laser source so as to laser mark information on the surface of the one or more of the eggs while the package is stationary with respect to the one or more optical steering elements.

Mode 54 relates to an apparatus for processing packages of eggs on a conveyor, comprising: means for adjusting a position of one or more of the eggs in each package so that each of the eggs in a given package assumes a particular orientation; and at least one sensor configured and arranged to sense a position of each of the packages of eggs with respect to the means for adjusting.

Mode 55 relates to a method for laser marking eggs, comprising a step of:
(a) laser marking information onto one or more eggs while the eggs are in a package disposed on a conveyor of a packing station.

Mode 56 relates to the method of mode 55, wherein the step (a) is performed while the package is disposed on a section of the conveyor located between an egg loading section and a package closing section of an egg packer.

Mode 57 relates to the method of mode 55, further comprising a step of:
(b) prior to performing the step (a), blowing air onto the eggs while the eggs are in the package disposed on the conveyor.

Mode 58 relates to the method of mode 55, further comprising a step of:
(b) after performing the step (a), vacuuming the eggs prior to closing the package while supplying air to be taken in by the vacuum.

Mode 59 relates to the method of mode 55, wherein the step (a) is performed such that, for at least one egg that is marked, a center point of the information laser marked onto the egg is located between the middle and an end of the egg.

Mode 60 relates to the method of mode 55, wherein the conveyor comprises a belt conveyor.

Mode 61 relates to the method of mode 55, wherein the step (a) is performed during one or more periods when the package is stationary.

Mode 62 relates to an apparatus for laser marking eggs on a conveyor of a packing station, comprising:
a laser source; and
one or more optical steering elements configured and arranged to direct energy from the laser source so as to mark information onto one or more eggs in packages of eggs disposed on the conveyor.

Mode 63 relates to the apparatus of mode 62, wherein the one or more steering elements are configured and arranged with respect to an egg packer such that the one or more steering elements direct laser energy from the laser source so as to mark information onto the one or more eggs in the packages of eggs while the packages of eggs are located between an egg loading section and a package closing section of the egg packer.

Mode 64 relates to the apparatus of mode 62, further comprising:
an air source configured and arranged to blow air onto the eggs while the eggs are in the packages disposed on the conveyor and before the one or more optical steering elements direct energy from the laser source so as to mark the information onto the one or more eggs in the packages.

Mode 65 relates to the apparatus of mode 62, further comprising:
a vacuum configured and arranged to vacuum the eggs after the one or more optical steering elements direct energy from the laser source so as to mark the information onto the one or more eggs in the packages and before the packages are closed; and
an air source configured and arranged to supply air to be taken in by the vacuum.

Mode 66 relates to the apparatus of mode 62, wherein the one or more steering elements are configured and arranged with respect to the conveyor such that, for at least one egg that is marked, a center point of the information laser marked onto the egg is located between the middle and an end of the egg.

Mode 67 relates to the apparatus of mode 62, wherein the conveyor comprises a belt conveyor.

Mode 68 relates to the apparatus of mode 62, wherein the one or more optical steering elements are further configured and arranged to direct energy from the laser source so as to mark information onto one or more eggs in packages of eggs while the package are stationary with respect to the one or more optical steering elements.

Mode 69 relates to an apparatus for laser marking eggs, comprising:
a laser source; and means for directing energy from the laser source so as to mark information onto one or more eggs in packages of eggs disposed on a conveyor of a packing station.

Mode 70 relates to a package of eggs comprising a plurality of eggs arranged in one or more rows, wherein the eggs are arranged in the package so that a long axis of each egg in the package is tilted toward the back of the package so as to be at least slightly offset from vertical.

Mode 71 relates to the package of eggs of mode 70, wherein the eggs are further arranged in the package so that the long axis of each egg in the package is offset no more than 20 degrees from the long axis of each other egg in the package.

Mode 72 relates to the package of eggs of mode 71, wherein:
each of the eggs in the package has information laser marked on it in substantially the same location as the other eggs in the package; and
the eggs are oriented in the package such that information marked on each egg faces substantially the same direction as the information marked on the other eggs in the package.

Mode 73 relates to the package of eggs of mode 72, wherein, for at least one egg that is marked, a center point of the information laser marked onto the egg is located between the middle and an end of the egg.

Mode 74 relates to the package of eggs of mode 71, wherein, for at least one egg that is marked, a center point of the information laser marked onto the egg is located between the middle and an end of the egg.

Mode 75 relates to the package of eggs of mode 70, wherein the eggs are further arranged in the package so that the long axis of each egg in the package is offset no more than 10 degrees from the long axis of each other egg in the package.

Mode 76 relates to the package of eggs of mode 75, wherein:
each of the eggs in the package has information laser marked on it in substantially the same location as the other eggs in the package; and
the eggs are oriented in the package such that information marked on each egg faces substantially the same direction as the information marked on the other eggs in the package.

Mode 77 relates to the package of eggs of mode 76, wherein, for at least one egg that is marked, a center point of the information laser marked onto the egg is located between the middle and an end of the egg.

Mode 78 relates to the package of eggs of mode 76, wherein, for at least one egg that is marked, a center point of the information laser marked onto the egg is located between the middle and an end of the egg.

Mode 79 relates to the package of eggs of mode 70, wherein:
each of the eggs in the package has information laser marked on it in substantially the same location as the other eggs in the package; and
the eggs are oriented in the package such that information marked on each egg faces substantially the same direction as the information marked on the other eggs in the package.

Mode 80 relates to the package of eggs of mode 79, wherein, for at least one egg that is marked, a center point of the information laser marked onto the egg is located between the middle and an end of the egg.

Mode 81 relates to the package of eggs of mode 70, wherein, for at least one egg that is marked, a center point of the information laser marked onto the egg is located between the middle and an end of the egg.

Mode 82 relates to the package of eggs of mode 70, wherein the eggs are arranged in the package so that the long axis of each egg in the package is tilted toward the back of the package so as to be offset from vertical by a minimum of 3 degrees.

Mode 83 relates to the package of eggs of mode 82, wherein:
each of the eggs in the package has particular information marked on it; and
each of the eggs in the package is positioned in the package such that at least the particular information is visible upon opening the package, without altering a position of the egg.

Mode 84 relates to the package of eggs of mode 70, wherein the eggs are arranged in the package so that the long axis of each egg in the package is tilted toward the back of the package so as to be offset from vertical by a minimum of 10 degrees.

Mode 85 relates to the package of eggs of mode 70, wherein:
each of the eggs in the package has particular information laser marked on it; and
each of the eggs in the package is positioned in the package such that at least the particular information is visible upon opening the package, without altering a position of the egg.

Mode 86 relates to the apparatus of mode 70, wherein eggs are arranged in the package such that the long axes of all of the eggs in each row of eggs in the package form approximate right angles with respect to a line intercepting bottoms of receptacles holding the eggs in such a row.

Mode 87 relates to the apparatus of mode 71, wherein eggs are arranged in the package such that the long axes of all of the eggs in each row of eggs in the package form approximate right angles with respect to a line intercepting bottoms of receptacles holding the eggs in such a row.

Mode 88 relates to a package of eggs comprising a plurality of eggs arranged in one or more rows, wherein the eggs are further arranged in the package so that a long axis of each egg in the package is offset no more than 20 degrees from a long axis of each other egg in the package.

Mode 89 relates to the package of eggs of mode 88, wherein:
each of the eggs in the package has information laser marked on it in substantially the same location as the other eggs in the package; and
the eggs are oriented in the package such that information marked on each egg faces substantially the same direction as the information marked on the other eggs in the package.

Mode 90 relates to the package of eggs of mode 89, wherein, for at least one egg that is marked, a center point of the information laser marked onto the egg is located between the middle and an end of each egg that is marked.

Mode 91 relates to the package of eggs of mode 88, wherein, for at least one egg that is marked, a center point of the information laser marked onto the egg is located between the middle and an end of each egg that is marked.

Mode 92 relates to the package of eggs of mode 88, wherein the eggs are further arranged in the package so that the long axis of each egg in the package is offset no more than 10 degrees from the long axis of each other egg in the package.

Mode 93 relates to the package of eggs of mode 92, wherein:
each of the eggs in the package has information laser marked on it in substantially the same location as the other eggs in the package; and
the eggs are oriented in the package such that information marked on each egg faces substantially the same direction as the information marked on the other eggs in the package.

Mode 94 relates to the package of eggs of mode 93, wherein, for at least one egg that is marked, a center point of the information laser marked onto the egg is located between the middle and an end of each egg that is marked.

Mode 95 relates to the package of eggs of mode 92, wherein, for at least one egg that is marked, a center point of the information laser marked onto the egg is located between the middle and an end of each egg that is marked.

Mode 96 relates to the package of eggs of mode 88, wherein:
each of the eggs in the package has particular information marked on it; and each of the eggs in the package is positioned in the package such that at least the particular information is visible upon opening the package, without altering a position of the egg.

Mode 97 relates to the package of eggs of mode 88, wherein:
each of the eggs in the package has particular information laser marked it; and
each of the eggs in the package is positioned in the package such that at least the particular information is visible upon opening the package, without altering a position of the egg.

Mode 98 relates to a package of eggs comprising a plurality of eggs arranged in one or more rows, wherein the eggs are further arranged in the package so that the long axes of all of the eggs in the package are substantially parallel.

Mode 99 relates to the package of eggs of mode 98, wherein:
each of the eggs in the package has information laser marked on it in substantially the same location as the other eggs in the package; and
the eggs are oriented in the package such that information marked on each egg faces substantially the same direction as the information marked on the other eggs in the package.

Mode 100 relates to the package of eggs of mode 99, wherein, for at least one egg that is marked, a center point of the information laser marked onto the egg is located between the middle and an end of each egg that is marked.

Mode 101 relates to the package of eggs of mode 98, wherein, for at least one egg that is marked, a center point of the information laser marked onto the egg is located between the middle and an end of each egg that is marked.

Mode 102 relates to the package of eggs of mode 101, wherein:
each of the eggs in the package has particular information marked on it; and
each of the eggs in the package is positioned in the package such that at least the particular information is visible upon opening the package, without altering a position of the egg.

Mode 103 relates to the package of eggs of mode 98, wherein:
each of the eggs in the package has particular information laser marked on it; and
each of the eggs in the package is positioned in the package such that at least the particular information is visible upon opening the package, without altering a position of the egg.

Mode 104 relates to the package of eggs of mode 98, wherein eggs are arranged in the package such that the long axes of all of the eggs in each row of eggs in the package form approximate right angles with respect to a line intercepting bottoms of receptacles holding the eggs in such a row.

Mode 105 relates to the package of eggs of mode 104, wherein the eggs are arranged in the package so that a long axis of each egg in the package is tilted toward the back of the package so as to be at least slightly offset from vertical.

Mode 106 relates to a package of eggs comprising a plurality of eggs arranged in one or more rows, wherein eggs are arranged in the package such that long axes of all of the eggs in each row of eggs in the package form approximate right angles with respect to a line intercepting bottoms of receptacles holding the eggs in such a row.

Mode 107 relates to the apparatus of mode 106, wherein the eggs are arranged in the package so that a long axis of each egg in the package is tilted toward the back of the package so as to be at least slightly offset from vertical.

Mode 108 relates to the package of eggs of mode 107, wherein, for at least one egg that is marked, a center point of the information laser marked onto the egg is located between the middle and an end of each egg that is marked. Mode 109 relates to the package of eggs of mode 108, wherein: each of the eggs in the package has particular information marked on it; and
each of the eggs in the package is positioned in the package such that at least the particular information is visible upon opening the package, without altering a position of the egg.

Mode 110 relates to the package of eggs of mode 106, wherein:
each of the eggs in the package has particular information marked on it; and
each of the eggs in the package is positioned in the package such that at least the particular information is visible upon opening the package, without altering a position of the egg.

Mode 111 relates to a method for laser marking information on an egg, comprising a step of:
(a) laser marking information on the egg such that a center point of the information is located between the middle and an end of the egg.

Mode 112 relates to the method of mode 111, wherein the step (a) comprises laser marking the information on the egg such that at least some of the information comprises text that is oriented horizontally with respect to a long axis of the egg.

Mode 113 relates to an egg having information laser marked thereon, wherein a center point of the information laser marked onto the egg is located between the middle and an end of the egg.

Mode 114 relates to the egg of mode 113, wherein at least some of the information comprises text that is oriented horizontally with respect to a long axis of the egg.

Mode 115 relates to a method for processing one or more eggs, comprising steps of:
(a) laser marking first information on a first surface of an egg; and
(b) laser marking second information on a second surface of the egg such that the second information faces a substantially different direction than the first information.

Mode 116 relates to the method of mode 115, further comprising steps of:
(c) performing the steps (a) and (b) for all of the eggs in a package in such a way that the first information on each of the eggs in the package faces substantially the same direction with respect to the package as the first information on all of the other eggs in the package.

Mode 117 relates to an egg having laser marking thereon, wherein:
first information is laser marked on a first surface of the egg; and second information is laser marked on a second surface of the egg such that the second information faces a substantially different direction than the first information.

Mode 118 relates to a package of eggs, wherein:
each of the eggs in the package has first information laser marked on it in substantially the same location as the other eggs in the package;
the eggs are oriented in the package such that information laser marked on each egg faces substantially the same direction as the information laser marked on the other eggs in the package;
each of the eggs in the package has second information laser marked on it in substantially the same location as the other eggs in the package; and
for each of the eggs in the package, the second information faces a substantially different direction than the first information.

Mode 119 relates to a package of eggs, wherein at least two of the eggs in the package have different information laser marked on them.

Mode 120 relates to the package of eggs of mode 119, wherein each egg in the package has different information laser marked thereon than all of the other eggs in the package.

Mode 121 relates to a method for laser marking eggs, comprising:
(a) using a machine vision system to monitor laser marking of eggs by a laser marking system; and
(b) adjusting one or more parameters of the laser marking system based upon determinations made by the machine vision system.

Mode 122 relates to the method of mode 121, wherein:
the step (a) comprises using the machine vision system to monitor a performance characteristic of the laser marking process; and
the step (b) comprises adjusting an operational parameter of at least one component of the laser marking system based upon the monitored performance characteristic.

Mode 123 relates to the method of mode 121, wherein:
the step (a) comprises using the machine vision system to monitor one or more characteristics of the eggs that are to be marked by the laser marking system; and
the step (b) comprises adjusting an operational parameter of at least one component of the laser marking system based upon the one or more measured characteristics.

Mode 124 relates to a system for laser marking eggs, comprising:
a machine vision system configured and arranged to monitor laser marking of eggs by a laser marking system; and
one or more control elements configured and arranged to adjust one or more parameters of the laser marking system based upon determinations made by the machine vision system.

Mode 125 relates to the system of mode 124, wherein:
the machine vision system is further configured and arranged to monitor performance characteristic of the laser marking process; and
the one or more control elements are further configured to adjust an operational parameter of at least one component of the laser marking system based upon the monitored performance characteristic.

Mode 126 relates to the system of mode 124, wherein:
the machine vision system is further configured and arranged to monitor one or more characteristics of the eggs that are to be marked by the laser marking system; and
the one or more control elements are further configured to adjust an operational parameter of at least one component of the laser marking system based upon the one or more measured characteristics.

Mode 127 relates to a system for laser marking eggs, comprising:
a plurality of laser marking apparatuses configured and arranged to perform laser marking jobs queued by local computers for laser marking eggs being packed by egg packing stations; and
a central server, coupled to the local computers, configured to distribute the laser marking jobs to the local computers.

Mode 128 relates to the system of mode 127, wherein the central server is coupled to the local computers via the Internet.

Mode 129 relates to a method for controlling laser marking jobs, comprising a step of:
(a) with a central server, distributing the laser marking jobs from the central computer to local computers responsible for queuing laser marking jobs to one or more laser marking apparatuses configured and arranged to laser mark information on eggs.

Mode 130 relates to the method of mode 129, wherein the step (a) comprises distributing the laser marking jobs from the central server to the local computers via the Internet.

Mode 131 relates to a method for processing a package of objects, comprising a step of:
(a) after the objects have been placed in the package, mechanically adjusting a position of one or more of the objects so that each of the objects assumes a particular orientation within the package.

Mode 132 relates to the method of mode 131, further comprising a step of:
(b) after performing the step (a), marking information on a surface of one or more of the objects while the objects are in the package.

Mode 133 relates to the method of mode 132, wherein the step of marking comprises laser marking the information on a surface of one or more of the objects.

Mode 134 relates to the method of mode 131, wherein the step (a) is performed using an object orienter positioned above the package and comprising a plurality of resilient members configured and arranged to be moved relative to the objects in the package so as to urge them to predetermined orientations.

Mode 135 relates to the method of mode 131, wherein the step (a) further comprises adjusting the position of the one or more objects in the package so that a long axis of each object in the package is tilted toward the back of the package so as to be at least slightly offset from vertical.

Mode 136 relates to an apparatus for processing packages of objects on a conveyor, comprising: an object orienter configured and arranged with respect to the conveyor so as to adjust a position of one or more of the objects in each of the packages so that each of the objects in a given package assumes a particular orientation within that package.

Mode 137 relates to the apparatus of mode 136, wherein the object orienter is further configured and arranged to adjust the position of the one or more objects in each of the packages so that a long axis of each object in a given package is tilted toward the back of the package so as to be at least slightly offset from vertical.

Mode 138 relates to the apparatus of mode 136, wherein the orienter comprises a plurality of resilient members configured and arranged to be moved relative to the objects in each package so as to urge them to predetermined orientations.

Mode 139 relates to the apparatus of mode 136 or 137, wherein the objects are eggs and each package has a bottom portion for receiving eggs and a hinged lid, comprising:
a. a package reversing mechanism upstream of the orienter, which receives packages with lids open and oriented toward an upstream direction and then reverses the package direction so that the open lid is disposed toward the orienter and leading the package; and
b. downstream of the orienter, one or more printing stations for printing information on the eggs.

Mode 140 relates to the apparatus of mode 139, wherein the conveyor is slanted in an upward direction relative to movement of the packages with respect to the orienter and the one or more printing stations.

Mode 141 relates to the apparatus of mode 139, wherein the one or more printing stations include a laser printing station and an ink printing station.

## Claims

1. A method for laser marking an egg shell, comprising
controlling a laser beam directed onto the egg shell so as to discolor an outer layer of the egg shell without etching substantially into layers of the egg shell underneath the outer layer.

2. The method claim 1, wherein controlling the laser beam includes sweeping the laser beam multiple times along a surface of the egg shell, wherein the laser beam has an energy density of less than about 2000 watts per square inch.

3. The method of claims 1 or 2, further including
laser marking information onto the egg shell in multiple passes and
sweeping the laser beam along the surface of the egg shell at different rates during at least two of the multiple passes,
wherein the discolor of the outer layer of the egg shell is the information that is laser marked on to the outer layer of the egg shell.

4. The method of claim 3, wherein a center point of the information that is laser marked onto the egg shell is located between a middle and an end of the egg shell.

5. The method claim 1, wherein controlling the laser beam includes sweeping the laser beam multiple times along a surface of the egg shell, wherein the laser beam has an energy density of less than about 1600 watts per square inch.

6. The method of claims 1, 2, 3, 4 or 5, wherein controlling the laser beam includes controlling the laser beam such that the egg shell is etched no more than about 25 microns deep.

7. The method of claim 1, 2, 3, 4, 5, or 6, wherein controlling the laser beam includes controlling a laser beam directed onto an egg shell while the egg is in a package disposed on a conveyor of a packing station.

8. The method of claims 1, 2, 3, 4, 5, 6, or 7, wherein controlling the laser beam includes controlling a laser beam directed onto an egg shell while the egg is in a package disposed on a section of the conveyor located between an egg loading section and a package closing section of an egg packer.

9. The method of claims 1, 2, 3, 4, 5, 6, 7, 8, or 9,
wherein the egg shell includes a first surface of the egg and a second surface of the egg, and
wherein a first information is laser marked on the first surface of the egg, and a second information is laser marked on the second surface of the egg such that the second information faces a substantially different direction than the first information.

10. An apparatus for laser marking an egg shell, the apparatus comprising:
a laser source; and
one or more optical steering elements configured to control and direct energy from the laser source onto the egg shell so as to discolor an outer layer of the egg shell without etching substantially into layers of the egg shell underneath the outer layer.

11. The apparatus of claim 10, wherein the discolor of the outer layer of the egg shell is information that is marked on to the outer layer of the egg shell.

12. The apparatus of claims 10 or 11, wherein the one or more optical steering elements are configured and arranged with respect to an egg packer such that the one or more optical steering elements direct laser energy from the laser source so as to mark information on the egg shell while the egg shell is in a package of eggs while the package of eggs is located between an egg loading section and a package closing section of the egg packer.

13. The apparatus of claims 10, 11, or 12, further including an egg orienter positioned above the package and comprising a plurality of resilient members configured to be moved relative to the egg in the package so as to orient the egg to predetermined orientation before directing energy from the laser source onto the egg shell.

14. The apparatus of claims 10, 11, 12, or 13, further including
a machine vision system configured to monitor the laser marking of the egg shell and
one or more control elements configured to adjust one or more parameters of the apparatus based upon determinations made by the machine vision system.

15. The apparatus of claims 10, 11, 12, 13, or 14, further including
a plurality of laser sources configured to perform laser marking jobs queued by a local computer for laser marking eggs being packed by an egg packing station, and
a central server, coupled to the local computer, configured to distribute the laser marking jobs to the local computer.
